# EUROPEAN PATENT APPLICATION

(11) **EP 4 554 290 A1**
(43) Date of publication of application: **14.05.2025**
(21) Application number: 23845480.5
(22) Date of filing: 24.07.2023
(51) Int. Cl.: H04W 52/02

(54) **COMMUNICATION METHOD AND COMMUNICATION APPARATUS**

(30) Priority: 27.07.2022 CN 202210890972; 25.10.2022 CN 202211313298
(71) Applicant: Huawei Technologies Co., Ltd., Shenzhen, Guangdong 518129 (CN)
(72) Inventor: YANG, Rui, Shenzhen, Guangdong 518129 (CN); QIN, Cheng, Shenzhen, Guangdong 518129 (CN); WANG, Sihai, Shenzhen, Guangdong 518129 (CN)
(74) Representative: Pfenning, Meinig & Partner mbB
(86) International application number: PCT/CN2023/108802
(87) International publication number: WO 2024/022270

(57) **Abstract**

Embodiments of this application provide a communication method and a communication apparatus. The method may be applied to related fields such as artificial intelligence (artificial intelligence, AI) and machine learning. The method includes: sending first request information to a network device, where the first request information is for requesting to obtain a network selection policy for cell reselection or cell handover, the first request information includes an identifier of a first cell, and the first cell is a cell on which a first terminal device currently camps; receiving a first network selection policy from the network device, where the first network selection policy indicates a to-be-measured neighboring cell and/or a measurement manner corresponding to each of to-be-measured neighboring cells, and a quantity of to-be-measured neighboring cells is less than or equal to a quantity of neighboring cells of the first cell; and performing cell measurement according to the first network selection policy when a first condition is satisfied, to determine a target cell.

## Description

### CROSS-REFERENCE TO RELATED APPLICATIONS

This application claims priorities to Chinese Patent Application No. 202210890972.7, filed with the China National Intellectual Property Administration on July 27, 2022 and entitled "METHOD FOR REDUCING POWER CONSUMPTION", which is incorporated herein by reference in its entirety; and to Chinese Patent Application No. 202211313298.2, filed with the China National Intellectual Property Administration on October 25, 2022 and entitled "COMMUNICATION METHOD AND COMMUNICATION APPARATUS", both of which are incorporated herein by reference in their entireties.

### TECHNICAL FIELD

This application relates to the field of communication technologies, and in particular, to a communication method and a communication apparatus.

### BACKGROUND

When a network exception occurs on a terminal device or the terminal device is in a weak-signal coverage area, the terminal device may obtain an uninterruptible service of a wireless network through cell handover or cell reselection. For example, a terminal device in a radio resource control (radio resource control, RRC) connected (connected) mode may obtain an uninterruptible service of the wireless network through cell handover, and a terminal device in an RRC idle (idle) mode may obtain an uninterruptible service of the wireless network through cell reselection.

Currently, when performing cell reselection or cell handover, the terminal device mainly performs cell measurement according to a reselection criterion or a handover criterion from a network device. Generally, cell measurement to be performed by the terminal device according to the reselection criterion or the handover criterion configured by the network device is that the terminal device first measures an intra-frequency neighboring cell and then measures an inter-frequency neighboring cell. However, for some cells, network signals of intra-frequency neighboring cell of the cells may be weak, while a target cell selected by the terminal device is mostly an inter-frequency neighboring cell when the terminal device performs cell reselection or cell handover in the cell. In this case, power consumption of the terminal may be wasted.

### SUMMARY

Embodiments of this application provide a communication method and a communication apparatus, to reduce power consumption of a terminal device.

According to a first aspect, an embodiment of this application provides a communication method. The method may be implemented by a terminal device, for example, implemented by a first terminal device. The first terminal device includes a mobile phone, a band, a watch, a tablet computer, or the like. The method includes: sending first request information to a network device, where the first request information is for requesting to obtain a network selection policy for cell reselection or cell handover, the first request information includes an identifier of a first cell, and the first cell is a cell on which the first terminal device currently camps; receiving a first network selection policy from the network device, where the first network selection policy indicates a to-be-measured neighboring cell and/or a measurement manner corresponding to each of to-be-measured neighboring cells, and a quantity of to-be-measured neighboring cells is less than or equal to a quantity of neighboring cells of the first cell; and performing cell measurement according to the first network selection policy when a first condition is satisfied, to determine a target cell.

In this embodiment of this application, the first network selection policy may indicate the measurement manner of each of to-be-measured neighboring cells corresponding to the current cell. The terminal device may perform cell measurement on each neighboring cell in the measurement manner indicated by the first network selection policy, to help reduce power consumption of the terminal device. In addition, the quantity of to-be-measured neighboring cells indicated by the first network selection policy is less than or equal to the quantity of the neighboring cells corresponding to the first cell. When performing cell measurement according to the first network selection policy, the first terminal device needs to measure only the neighboring cells indicated by the first network selection policy, and does not need to measure a neighboring cell not indicated by the first network selection policy, so that a quantity of neighboring cells that need to be measured by the first terminal device is reduced, and the power consumption of the first terminal device is reduced.

In a possible design, the first network selection policy includes one or more of the following: a parameter of each neighboring cell; an exit threshold, where the exit threshold indicates a threshold of stopping performing cell measurement according to the first network selection policy; or a quantity of neighboring cells measured in one discontinuous reception (discontinuous reception, DRX) cycle.

In other words, the first network selection policy indicates the parameter of each of to-be-measured neighboring cells by the first terminal device, so that the first terminal device can determine the to-be-measured neighboring cell and the measurement manner of the to-be-measured neighboring cell, thereby reducing unnecessary neighboring-cell measurement and reducing the power consumption of the first terminal device. The first network selection policy indicates the exit threshold, so that the first terminal device performs, when the first terminal device has not selected the target cell in the case that the exit threshold is reached, cell measurement according to a criterion configured by the network device (for example, a reselection criterion or a handover criterion configured by the network device), thereby reducing a probability that the first terminal device cannot select the target cell during cell reselection or cell handover. In addition, the first network selection policy indicates the quantity of the neighboring cells measured by the first terminal device in one DRX cycle, so that the quantity of the neighboring cells measured by the first terminal device in one DRX cycle can be reduced, and the power consumption of the first terminal device is reduced. It is to be noted that the several types of information included in the first network selection policy are merely examples, and constitute no limitation. Other information that can indicate a neighboring cell may also be included.

In a possible design, the to-be-measured neighboring cell includes a first neighboring cell, and a parameter of the first neighboring cell includes an identifier of the first neighboring cell and a frequency of the first neighboring cell.

If the first network selection policy includes the parameter of each neighboring cell, the first network selection policy needs to include an identifier and a frequency of the neighboring cell, so that the terminal device performs cell measurement based on the identifier and the frequency, and a to-be-measured neighboring cell may be indicated by the identifier and the frequency of the neighboring cell.

In a possible design, the parameter of the first neighboring cell further includes one or more of the following: a measurement start threshold of the first neighboring cell, where the measurement start threshold indicates a threshold of starting measuring the first neighboring cell; a measurement stop threshold of the first neighboring cell, where the measurement stop threshold indicates a threshold of stopping measuring the first neighboring cell; a priority of the first neighboring cell; or a radio access technology (radio access technology, RAT) of the first neighboring cell.

In other words, the first network selection policy indicates the parameter of each neighboring cell, so that the first terminal device can determine the to-be-measured neighboring cell and the measurement manner of the to-be-measured neighboring cell, thereby reducing unnecessary neighboring-cell measurement and reducing the power consumption of the first terminal device. For example, the parameter of each neighboring cell includes a measurement start threshold of each neighboring cell. A threshold corresponding to the measurement start threshold is, for example, a value of a reference signal received power (reference signal received power, RSRP) of the cell on which the first terminal device currently camps. The first terminal device starts to measure a neighboring cell 1 only when determining that the RSRP of the cell on which the first terminal device currently camps reaches a measurement start threshold of the neighboring cell 1. In this case, if the value of the RSRP of the cell on which the first terminal device currently camps does not reach a measurement start threshold of a neighboring cell 2, the first terminal device does not measure the neighboring cell 2. In this way, even if the first terminal device needs to measure the neighboring cell 1 and the neighboring cell 2 in a process of performing cell reselection or cell handover, the first terminal device does not measure the neighboring cell 2 when the measurement start threshold of the neighboring cell 2 is not reached, so that the power consumption of the terminal device can be reduced.

It is to be noted that the several parameters included in the parameter of the neighboring cell are merely examples, and constitute no limitation. Another parameter that can indicate a neighboring cell may also be included.

In a possible design, the method further includes: if at least two neighboring cells of to-be-measured neighboring cells corresponding to the first cell have a same measurement start threshold, determining, based on priorities of the at least two neighboring cells, a sequence of measuring the at least two neighboring cells.

In other words, the first terminal device determines, based on the priorities of the at least two neighboring cells, the measurement sequence of measuring the at least two neighboring cells, to help improve a success rate of selecting a high-quality neighboring cell by the first terminal device.

In a possible design, the first network selection policy is determined by the network device based on auxiliary information from at least one second terminal device. The auxiliary information includes a radio resource management (radio resource management, RRM) measurement result obtained when the second terminal device camps on the first cell; and/or an RRM measurement result obtained when the second terminal device performs cell reselection or cell handover in the first cell.

In other words, in comparison with the reselection criterion or the handover criterion configured by the network device, in the first network selection policy determined based on the measurement result obtained when the second terminal device actually camping on the first cell performs cell reselection or cell handover, a neighboring cell that was not measured successfully before or whose probability of being measured successfully is less than a value may be filtered out, so that the quantity of the neighboring cells that need to be measured by the terminal device is reduced, and the power consumption of the terminal device is reduced. In addition, the target cell can be more quickly selected based on information about a neighboring cell successfully selected by the second terminal device, to help improve efficiency of cell reselection or cell handover.

In a possible design, the RRM measurement result includes the identifier of the first cell and one or more of the following: a time point at which the second terminal device enters the first cell and/or a time point at which the second terminal device leaves the first cell; a reference signal received power RSRP of the first cell that is obtained through measurement when the second terminal device camps on the first cell; an RSRP of the first cell that is obtained through measurement when the second terminal device leaves the first cell; an identifier of a neighboring cell selected when the second terminal device performs cell reselection or cell handover; or an RSRP of a neighboring cell that is obtained through measurement when the second terminal device performs cell reselection or cell handover.

It is to be noted that the information included in the auxiliary information is merely an example, and constitutes no limitation. Other information that can assist the network device in determining the network selection policy may also be included.

In a possible design, the auxiliary information further includes one or more of the following: device type information and/or device model information of the second terminal device; an abnormal event triggering the second terminal device to perform cell reselection or cell handover, where the abnormal event includes one or more of the following: signal strength of the first cell that is obtained through measurement by the second terminal device is less than or equal to preset signal strength, a network connection between the second terminal device and the first cell is broken, a current communication standard of the second terminal device is lower than a communication standard that is at a previous moment, or a ping-pong event, where the ping-pong event indicates that the second terminal device camps on at least two cells back and forth, and the at least two cells include the first cell; location information of the second terminal device; a moving direction of the second terminal device; a moving speed of the second terminal device; or first indication information, where the first indication information indicates whether the second terminal device executes the network selection policy from the network device.

In other words, the network device may determine different network selection policies based on the auxiliary information reported by the second terminal device. For example, the network device may determine, based on product information of the second terminal device, network selection policies applicable to different products; determine, based on the abnormal event triggering cell reselection or cell handover, network selection policies corresponding to different abnormal events; and determine, based on information such as the location information, the moving direction, or the moving speed of the second terminal device, information such as a neighboring cell on which a terminal device camping on the first cell may be to camp, so that the determined network selection policy is more targeted, and efficiency of selecting the target cell by a terminal device (for example, the first terminal device) that performs cell reselection or cell handover according to the network selection policy is higher.

In a possible design, the receiving a first network selection policy from the network device includes: receiving a network selection policy obtained by performing M times of optimization on the first network selection policy by the network device based on a first execution result, where the first execution result is an execution result of performing cell reselection or cell handover by at least one third terminal device according to the first network selection policy, the first execution result indicates whether the third terminal device successfully selects a neighboring cell according to the first network selection policy, and M is a quantity of times of optimization performed before the network device receives the first request information.

In other words, the first network selection policy received by the first terminal device is a policy obtained by performing optimization by the network device based on the first execution result of the third terminal device for the first network selection policy. When the first terminal device performs cell reselection or cell handover based on the optimized first network selection policy, efficiency of selecting a high-quality target cell is higher.

In a possible design, duration for which the second terminal device camps on the first cell is greater than or equal to first duration.

The second terminal device is a resident device in the first cell, so that the first network selection policy determined by the network device based on the second terminal device is more accurate. When the first terminal device performs cell reselection or cell handover according to the first network selection policy, efficiency of selecting the target cell is higher.

In a possible design, the first request information further includes one or more of the following: device type information and/or device model information of the first terminal device; location information of the first terminal device; a moving direction of the first terminal device; or a moving speed of the first terminal device.

For example, if the first request information includes the device type information and/or the device model information of the first terminal device, the network device may send, to the first terminal device, a network selection policy determined based on the device type information and/or the device model information. If the first request information includes the location information, the moving direction, and/or the moving speed of the first terminal device, the network device may send, to the first terminal device, a network selection policy determined based on the location information, the movement method, and/or the moving speed. In this way, a targeted network selection policy can be obtained, and efficiency of cell reselection or cell handover can be improved. It is to be noted that the information included in the first request information is merely an example, and constitutes no limitation.

In a possible design, the first network selection policy further includes a measurement cycle for measuring each of to-be-measured neighboring cells, and the measurement cycle is determined based on the location information, the moving direction, and/or the moving speed of the first terminal device.

The network device may determine, based on information such as the location information, the moving direction, and/or the moving speed of the first terminal device, information such as a neighboring cell that may be to be camped on and whether the measurement cycle for each neighboring cell needs to be prolonged. For example, if the moving speed of the first terminal device is low, the measurement cycle for measuring each neighboring cell may be prolonged, to reduce the power consumption of the terminal device. If the moving speed of the first terminal device is high, the measurement cycle for measuring each neighboring cell is not prolonged, to help increase a probability that the first terminal device selects the target cell.

In a possible design, the measurement cycle is indicated by a parameter of the DRX cycle.

The measurement cycle that is for each neighboring cell and that is indicated by the parameter of the DRX cycle is more accurate.

In a possible design, the first network selection policy further includes:
identifiers and frequencies of K cells, where the K cells include the first cell and K-1 cells on which the first terminal device is about to camp, the first network selection policy indicates a to-be-measured neighboring cell corresponding to each cell of the K cells and/or a measurement manner corresponding to each of to-be-measured neighboring cells corresponding to the cell, and K is an integer greater than or equal to 1.

In addition to the information about the neighboring cell of the first cell on which the first terminal device currently camps, the first network selection policy may further include information about a neighboring cell on which the first terminal device is about to camp, so that after camping on another cell, the first terminal device can directly perform neighboring-cell measurement according to the network selection policy, thereby reducing signaling exchange between the first terminal device and the network device.

In a possible design, the method further includes: sending the first request information to the network device when a second condition is satisfied, where the second condition includes one or more of the following: the first cell is a cell on which the first terminal device did not camp before; the first terminal device stores no network selection policy from the network device; or the first terminal device stores a second network selection policy from the network device, and storage duration of the second network selection policy is greater than or equal to second duration.

When the first terminal device did not camp on the first cell before, or the first terminal device camped on the first cell before but had no network selection policy sent by the network device, or the first terminal device camped on the first cell before but a previous network selection policy expires, it indicates that the first terminal device has no network selection policy that can be used for cell reselection or cell handover. In this case, the first terminal device may send the first request information to the network device, to request the network selection policy. In this way, the first terminal device can obtain the network selection policy for cell reselection or cell handover in a timely manner, thereby reducing a probability of a failure in cell reselection or cell handover. It is to be noted that the information included in the second condition is merely an example, and constitutes no limitation.

In a possible design, the method further includes: sending, to the network device, the first execution result of performing cell reselection or cell handover according to the first network selection policy, where the first execution result indicates whether the first terminal device successfully determines the target cell, and the first execution result is for optimizing the first network selection policy.

The first terminal device reports the first execution result for the first network selection policy, so that the network device can optimize the first network selection policy based on the first execution result, thereby improving accuracy of the first network selection policy.

In a possible design, the first execution result indicates that the first terminal device successfully determines the target cell, and the first execution result further includes an identifier of the target cell.

The first terminal device adds, to the first execution result, the identifier of the target cell selected by the first terminal device when the first terminal device performs cell reselection or cell handover, so that the network device can adjust, based on the identifier of the target cell, a parameter corresponding to the target cell in the first network selection policy. For example, when there is a cell that has a measurement start threshold the same as that of the target cell, a priority of the target cell is set to being higher than a priority of the cell that has the measurement start threshold the same as that of the target cell, so that the terminal device performing cell reselection or cell handover based on the adjusted first network selection policy can determine the target cell as quickly as possible, thereby improving efficiency of performing cell reselection or cell handover by the terminal device.

According to a second aspect, a communication method is provided. The method may be implemented by a network device. The network device includes a device such as a cloud server, a server, or a base station. The method includes: receiving first request information from a first terminal device, where the first request information is for requesting to obtain a network selection policy for cell reselection or cell handover, the first request information includes an identifier of a first cell, and the first cell is a cell on which the first terminal device currently camps; determining, based on the identifier of the first cell, a first network selection policy corresponding to the first cell, where the first network selection policy indicates a to-be-measured neighboring cell and/or a measurement manner of each of to-be-measured neighboring cells, and a quantity of to-be-measured neighboring cells is less than or equal to a quantity of neighboring cells of the first cell; and sending the first network selection policy to the first terminal device, where the first network selection policy is used by the first terminal device to determine a target cell.

In a possible design, the first network selection policy includes one or more of the following: a parameter of each neighboring cell; an exit threshold, where the exit threshold indicates a threshold of stopping performing cell measurement according to the first network selection policy; or a quantity of neighboring cells measured in one discontinuous reception DRX cycle.

In a possible design, the to-be-measured neighboring cell includes a first neighboring cell, and a parameter of the first neighboring cell includes an identifier of the first neighboring cell and a frequency of the first neighboring cell.

In a possible design, the parameter of the first neighboring cell further includes one or more of the following: a measurement start threshold of the first neighboring cell, where the measurement start threshold indicates a threshold of starting measuring the first neighboring cell; a measurement stop threshold of the first neighboring cell, where the measurement stop threshold indicates a threshold of stopping measuring the first neighboring cell; a priority of the first neighboring cell; or an RAT of the first neighboring cell.

In a possible design, the priority is used by the first terminal device to determine, when at least two neighboring cells of to-be-measured neighboring cells corresponding to the first cell have a same measurement start threshold, a sequence of measuring the at least two neighboring cells.

In a possible design, the method further includes: determining whether at least two neighboring cells of the to-be-measured neighboring cells corresponding to the first cell have a same measurement start threshold; and if a second neighboring cell has a measurement start threshold the same as that of the first neighboring cell, determining that the parameter of the first neighboring cell further includes a priority of the first neighboring cell, and a parameter of the second neighboring cell further includes a priority of the second neighboring cell.

In a possible design, the method further includes: receiving auxiliary information from at least one second terminal device, and determining the first network selection policy based on the auxiliary information, where the second terminal device is a terminal device that camped on the first cell before, and the auxiliary information includes: a radio resource management RRM measurement result obtained when the second terminal device camps on the first cell; and/or an RRM measurement result obtained when the second terminal device performs cell reselection or cell handover in the first cell.

In a possible design, the RRM measurement result includes the identifier of the first cell and one or more of the following: a time point at which the second terminal device enters the first cell and/or a time point at which the second terminal device leaves the first cell; a reference signal received power RSRP of the first cell that is obtained through measurement when the second terminal device camps on the first cell; an RSRP of the first cell that is obtained through measurement when the second terminal device leaves the first cell; an identifier of a neighboring cell selected when the second terminal device performs cell reselection or cell handover; or an RSRP of a neighboring cell that is obtained through measurement when the second terminal device performs cell reselection or cell handover.

In a possible design, the auxiliary information includes one or more of the following: device type information and/or device model information of the second terminal device; an abnormal event triggering the second terminal device to perform cell reselection or cell handover, where the abnormal event includes one or more of the following: signal strength of the first cell that is obtained through measurement by the second terminal device is less than or equal to preset signal strength, a network connection between the second terminal device and the first cell is broken, a current communication standard of the second terminal device is lower than a communication standard that is at a previous moment, or a ping-pong event, where the ping-pong event indicates that the second terminal device camps on at least two cells back and forth, and the at least two cells include the first cell; location information of the second terminal device; a moving direction of the second terminal device; a moving speed of the second terminal device; or first indication information, where the first indication information indicates whether the second terminal device executes the network selection policy from the network device.

In a possible design, the method further includes: optimizing the first network selection policy. The optimizing the first network selection policy includes: receiving, from a third terminal device in an i^{th} optimization process, a first execution result of performing cell reselection or cell handover according to the first network selection policy, and optimizing the first network selection policy based on the first execution result, where i is an integer from 1 to M, M is a quantity of times of optimization performed before the first request information is received, and the first execution result indicates whether at least one third terminal device successfully selects a neighboring cell according to the first network selection policy.

In a possible design, the sending the first network selection policy to the first terminal device includes: sending, to the first terminal device, a network selection policy obtained by performing M times of optimization on the first network selection policy.

In a possible design, duration for which the second terminal device camps on the first cell is greater than or equal to first duration.

In a possible design, the first request information further includes one or more of the following: device type information and/or device model information of the first terminal device; location information of the first terminal device; a moving direction of the first terminal device; or a moving speed of the first terminal device.

In a possible design, the method further includes: determining, based on the location information, the moving direction, and/or the moving speed of the first terminal device, a measurement cycle for measuring each of to-be-measured neighboring cells, where the first network selection policy further includes the measurement cycle.

In a possible design, the measurement cycle is indicated by a parameter of the DRX cycle.

In a possible design, the first network selection policy further includes:
identifiers and frequencies of K cells, where the K cells include the first cell and K-1 cells on which the first terminal device is about to camp, the first network selection policy indicates a to-be-measured neighboring cell corresponding to each cell of the K cells and/or a measurement manner corresponding to each of to-be-measured neighboring cells corresponding to the cell, and K is an integer greater than or equal to 1.

In a possible design, the method further includes: receiving, from the first terminal device, the first execution result of performing cell reselection or cell handover according to the first network selection policy, where the first execution result indicates whether the first terminal device successfully determines the target cell; and optimizing the first network selection policy based on the first execution result.

In a possible design, the first execution result indicates that the first terminal device successfully determines the target cell, and the first execution result further includes an identifier of the target cell.

According to a third aspect, a communication apparatus is provided. The communication apparatus may be an electronic device, or may be a chip or a chip system used in the electronic device. The communication apparatus includes a communication interface and a processor, and optionally, further includes a memory. The memory is configured to store a computer program. The processor is coupled to both the memory and the communication interface. When the processor reads the computer program or instructions, the communication apparatus performs the method performed by the terminal device in the first aspect or the method performed by the network device in the second aspect.

According to a fourth aspect, a computer-readable storage medium is provided. The computer-readable storage medium is configured to store a computer program. When the computer program is run on a computer, the computer is enabled to perform the method provided in the first aspect or the second aspect.

According to a fifth aspect, a computer program product is provided, including a computer program. When the computer program is run on a computer, the computer is enabled to perform the method in the first aspect or the second aspect.

According to a sixth aspect, a chip system is provided, including a processor and an interface. The processor is configured to invoke instructions from the interface and run the instructions, to enable the chip system to implement the method in the first aspect or the second aspect.

For beneficial effects of the second aspect to the sixth aspect, refer to the beneficial effects of the first aspect. Details are not described again.

### BRIEF DESCRIPTION OF DRAWINGS

FIG. 1 is a diagram of an application scenario to which embodiments of this application are applicable;
FIG. 2 is a schematic flowchart of a method for determining a network selection policy according to an embodiment of this application;
FIG. 3 is a diagram of a type of neighboring-cell measurement according to an embodiment of this application;
FIG. 4 is an interaction flowchart of a method for determining a network selection policy according to an embodiment of this application;
FIG. 5 is a schematic flowchart of a communication method according to an embodiment of this application;
FIG. 6 is a diagram of another type of neighboring-cell measurement according to an embodiment of this application;
FIG. 7 is an interaction flowchart of a communication method according to an embodiment of this application;
FIG. 8 is a diagram of a structure of a terminal device according to an embodiment of this application; and
FIG. 9 is a diagram of a layered architecture of a terminal device according to an embodiment of this application.

### DESCRIPTION OF EMBODIMENTS

The following first explains and describes some terms in embodiments of this application, to facilitate understanding by a person skilled in the art.
(1) Terminal device: The terminal device includes a device that provides voice and/or data connectivity for users. Specifically, the terminal device includes a device that provides voice for users, a device that provides data connectivity for users, or a device that provides voice and data connectivity for users. For example, the terminal device may be a hand-held device with a wireless connection function or a processing device connected to a wireless modem. The terminal device may communicate with a core network through a radio access network (radio access network, RAN), and exchange a voice or data with the RAN, or exchange a voice and data with the RAN. The terminal device may be user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, hand-held, or a computer-embedded mobile apparatus. For example, the terminal device may be a device such as a personal communications service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may further include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of example but not limitation, in embodiments of this application, the terminal device may alternatively be a wearable device or an extended reality (extended reality, XR) device. The wearable device may also be referred to as a wearable intelligent device, an intelligent wearable device, or the like, and is a general term of wearable devices that are intelligently designed and developed for daily wear by using a wearable technology, for example, glasses, a glove, a watch, and a band. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, a smart watch or smart glasses, and include devices that are dedicated to only one type of application function and need to collaboratively work with another device such as a smartphone, for example, various smart bands, smart helmets, or smart jewelry for monitoring physical signs. The XR device includes devices in a plurality of forms such as augmented reality (AR), virtual reality (VR), and mixed reality (MR).

If the various terminal devices described above are located in a vehicle (for example, disposed in the vehicle or mounted in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it is understood that any device that can perform data communication with a base station may be considered as the terminal device.

In embodiments of this application, an apparatus configured to implement a function of the terminal device may be a terminal device, or may be an apparatus that can support the terminal device in implementing the function, for example, a chip system. The apparatus may be mounted in the terminal device. In embodiments of this application, the chip system may include a chip, or may include a chip and another discrete component. In the technical solutions provided in embodiments of this application, an example in which the apparatus configured to implement the function of the terminal is a terminal device is used for describing the technical solutions provided in embodiments of this application.

(2) Network device: The network device includes, for example, an access network (access network, AN) device such as a base station (for example, an access point), and may be a device that communicates with a wireless terminal device through an air interface in one or more cells in an access network. Alternatively, a network device in a vehicle-to-everything (vehicle-to-everything, V2X) technology is a road side unit (road side unit, RSU). The base station may be configured to perform mutual conversion between a received over-the-air frame and an IP packet, to serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in an LTE system or a long term evolution-advanced (long term evolution-advanced, LTE-A) system, may include a next generation NodeB (next generation NodeB, gNB) in a 5th generation mobile communication technology (5th generation, 5G) NR system (also referred to as an NR system for short), or may include a central unit (central unit, CU) and a distributed unit (distributed unit, DU) in a cloud radio access network (cloud radio access network, Cloud RAN) system. This is not limited in embodiments of this application.

The network device may further include a core network device. In embodiments of this application, the core network device includes, for example, an access and mobility management function (access and mobility management function, AMF) or a user plane function (user plane function, UPF) in a 5G system, or includes a mobility management entity (mobility management entity, MME) in a 4G system.

In embodiments of this application, an apparatus configured to implement a function of the network device may be a network device, or may be an apparatus that can support the network device in implementing the function, for example, a chip system. The apparatus may be mounted in the network device. In the technical solutions provided in embodiments of this application, an example in which the apparatus configured to implement the function of the network device is a network device is used for describing the technical solutions provided in embodiments of this application.
(3) Radio resource control (radio resource control, RRC): In LTE, two RRC modes are supported, namely, an RRC idle mode (RRC_IDLE) and an RRC connected mode (RRC_CONNECTED). In NR, an RRC inactive mode (RRC_INACTIVE) is introduced. To be specific, in the NR, three modes are supported: the RRC idle mode (RRC_IDLE), the RRC inactive mode (RRC_INACTIVE), and the RRC connected mode (RRC_CONNECTED). Different RRC modes can be switched with each other.
(4) Communication standard: The communication standard includes but is not limited to a second generation mobile communication technology (2nd-Generation wireless telephone technology, 2G) network, a third generation mobile communication technology (3rd-Generation wireless telephone technology, 3G) network, a fourth generation mobile communication technology (4th-Generation wireless telephone technology, 4G) network, a fifth generation mobile communication technology (5th-Generation wireless telephone technology, 5G) network, and the like, for example, a global system for mobile communications (global system for mobile communications, GSM) network, a code division multiple access (code division multiple access, CDMA) network, a wideband code division multiple access (wideband code division multiple access, WCDMA) network, a universal mobile telecommunications system (universal mobile telecommunications system, UMTS) network, and a long term evolution (long term evolution, LTE) network.
(4.1) Fall into a lower standard: Fall into a lower standard means that a terminal device is handed over from a high communication standard to a low communication standard, for example, from 5G to 4G or 3G, from 4G to 3G, or from 5G to 3G or 4G.

For example, the terminal device is handed over from 5G to 4G. A process of falling into a lower standard includes: The terminal device camps on a 5G base station, that is, a current communication standard of the terminal device is 5G. When a condition is satisfied, the terminal device performs cell handover or cell reselection. For example, if the terminal device is handed over to or reselects a 4G base station, the terminal device falls from 5G to 4G. For example, the condition may be that the terminal device detects that the terminal device moves out of coverage of the 5G base station (for example, signal strength of the 5G base station is lower than a threshold), the terminal device detects that signal strength of the 4G base station is greater than a threshold, for example, greater than signal strength of the 5G base station, or the like.
(4.2) Network dropping: Network dropping means that a terminal device changes from a state of connection to a network to a state of disconnection from a network. After the terminal device drops from a network, a cell reselection process (for example, also be referred to as a network search and registration process) needs to be performed if the network needs to be recovered. In brief, the network search and registration process may specifically include a network search process and a network registration process. In the network search process, the terminal device performs cell search, and performs the network registration process after finding a suitable cell. In the network registration process, the terminal device sends identity information (for example, identity information of a subscriber identity module (subscriber identity module, SIM) card) to a network side device. The network side device verifies validity of the identity information. After determining, through verification, that the identity information is valid, the network side device allows the terminal device to camp on the cell.
(4.3) Ping-pong event: The ping-pong event is an event that a terminal device camps on two cells back and forth. Cell reselection is used as an example. If signal strength of two cells changes sharply, a terminal device in an RRC idle mode frequently performs cell reselection, and camps on the two cells back and forth.
(5) Mobility management mechanism of a terminal: The mobility management mechanism of the terminal is a mechanism provided to ensure that the terminal device has a continuous network service, and specifically includes cell handover (handover) or cell reselection (reselection). The cell handover refers to that a terminal device in an RRC connected mode is handed over from a current cell to another cell through neighboring-cell measurement. The cell reselection is a process in which a terminal device in an RRC idle mode or inactive mode monitors signals of a serving cell and a neighboring cell, to select an optimal cell for providing a network service.

The cell reselection is used as an example. A process of the cell reselection includes: A network connection between a terminal device and a first cell is broken. The terminal device may perform neighboring-cell measurement, use a measured neighboring cell as a target cell for reselection, and send identity information to the target cell. When the target cell determines, through verification, that the identity information of the terminal device is valid, the terminal device may camp on the target cell. Alternatively, when determining that signal strength of a first cell on which a terminal device currently camps is less than or equal to preset signal strength, the terminal device starts performing neighboring-cell measurement, and determines whether a measured neighboring cell satisfies a reselection condition. If the measured neighboring cell satisfies the reselection condition, the terminal device uses the measured neighboring cell as a target cell for cell reselection, and sends identity information to the target cell. When the target cell determines, through verification, that the identity information of the terminal device is valid, the terminal device may camp on the target cell. The reselection condition is, for example, whether an RSRP of the measured neighboring cell is greater than a preset RSRP.

It may be understood that the foregoing process of the cell reselection or the cell handover may be performed based on a result of measuring the neighboring cell.
(6) Neighboring-cell measurement: A terminal device measures an RSRP and/or reference signal received quality (reference signal received quality, RSRQ) of a neighboring cell, for cell handover or cell reselection.
(7) In embodiments of this application, "a plurality of" means two or more. In view of this, in embodiments of this application, "a plurality of" may also be understood as "at least two". "At least one" may be understood as one or more, for example, one, two, or more. For example, including at least one means that one, two, or more are included, and one or ones that are included are not limited. For example, if at least one of A, B, and C is included, A, B, C, A and B, A and C, B and C, or A, B, and C may be included. Similarly, understandings of descriptions such as "at least one" are also similar. "And/or" describes an association relationship between associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects.

Currently, there are still areas with weak network signals, low standards, and no network signals. In these areas, using cell reselection as an example, a terminal device in an RRC idle mode generally performs cell measurement according to a reselection criterion configured by a network, to perform cell reselection. For example, the reselection criterion indicates the following information:
frequency of a cell on which the terminal device currently camps = 38098;
identifier of the cell on which the terminal device currently camps, for example, a physical cell identifier (physical cell ID, PCI) = 208;
reselection priority: 7;
intra-frequency start threshold = -82 dB;
inter-frequency start threshold = -82 dB;
a measurement rule is that the terminal device can perform:
   measurement on an intra-frequency neighboring cell;
   measurement on an inter-frequency neighboring cell with a higher priority;
   measurement on inter-frequency neighboring cells with a same priority; and
   measurement on an inter-frequency neighboring cell with a lower priority.

If the terminal device determines, through measurement, that an RSRP of the cell on which the terminal device currently camps reaches -82 dB, the terminal device starts to measure inter-frequency neighboring cells and all intra-frequency neighboring cells. Optionally, a sequence of measuring the inter-frequency neighboring cells by the terminal device is based on priorities of the inter-frequency neighboring cells. The priorities of the inter-frequency neighboring cells may be indicated by a neighboring-cell list from the network device. The neighboring-cell list includes frequencies, PCIs, network types, and priorities of the to-be-measured inter-frequency neighboring cells. For example, refer to Table 1:

| PCI | Frequency | Network type | Priority |
|---|---|---|---|
| Neighboring cell 1 | 0x5a87a | NR | 7 |
| Neighboring cell 2 | 0x68402 | NR | 7 |
| Neighboring cell 3 | 0x672 | LTE | 5 |
| Neighboring cell 4 | 0x708 | LTE | 6 |
| ... | ... | ... | ... |

When the terminal device performs neighboring-cell measurement according to the reselection criterion, regardless of a location of the terminal device, the terminal device first tests and measures a cell with a higher priority. For example, the terminal device first measures the neighboring cell 1 and the neighboring cell 2, that is, preferentially measures 5G cells. However, if the terminal device is located in a place where signal coverage of the neighboring cell 1 and the neighboring cell 2 is weak, the terminal device may not be able to reselect the 5G cell, resulting in a waste of power consumption. In addition, when the terminal device measures different cells, the RSRP of the cell on which the terminal device currently camps may be different. For example, when the terminal device measures the neighboring cell 1, the RSRP of the cell on which the terminal device currently camps is an RSRP 1. When the terminal device measures the neighboring cell 2, the RSRP of the cell on which the terminal device currently camps is an RSRP 2. If RSRP 1≠RSRP 2, when the terminal device starts measuring the neighboring cell 1 and the neighboring cell 2 at a same start threshold, the terminal device may measure some neighboring cells excessively early or excessively late. Excessively early measurement is useless measurement, resulting in a waste of the power consumption of the terminal device. If measurement is excessively late, a neighboring cell with good signal strength may not be measured, affecting performance.

In view of this, an embodiment of this application provides a communication method. In the method, a network device may send a network selection policy to a terminal device, to indicate, to the terminal device, a to-be-measured neighboring cell and a measurement manner of each of to-be-measured neighboring cells. The terminal device may measure only the neighboring cells indicated by the network selection policy, thereby reducing power consumption of the terminal device. In addition, when the terminal device measures each neighboring cell in the measurement manner of each neighboring cell, a probability of measuring a neighboring cell excessively early or excessively late can be reduced. For example, when the RSRP of the cell on which the terminal device currently camps is the RSRP 1, the neighboring cell 1 starts to be measured, so that the power consumption of the terminal device is reduced when the performance is ensured.

The communication method provided in this embodiment of this application is described below with reference to the accompanying drawings of this specification.

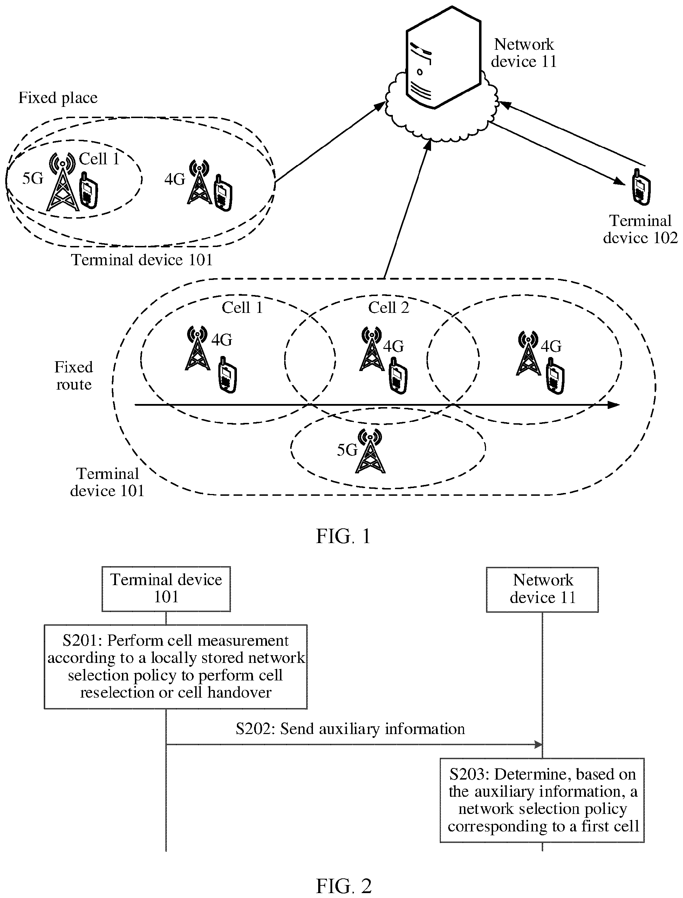

FIG. 1 is a diagram of an application scenario according to an embodiment of this application. The application scenario includes a terminal device 10 and a network device 11. The terminal device 10 includes a terminal device 101 that camped on a fixed place and/or a fixed route before and a terminal device 102 that did not camp on the fixed place and/or the fixed route before. For example, the terminal device 10 may include a mobile phone, a band, a watch, or a tablet computer, and the network device 11 may include, but is not limited to, a cloud server or a base station.

When the terminal device 101 camps on a cell, for example, camps on a cell 1, if it is determined that an event (for example, network dropping, falling into a lower standard, signal strength of the cell 1 being less than or equal to preset signal strength, or the terminal device being about to move out of coverage of the cell 1) that requires cell reselection or cell handover occurs, the terminal device 101 may perform cell reselection or cell handover according to a locally stored network selection policy. After selecting a cell, the terminal device 101 may send auxiliary information to the network device 11. The auxiliary information may include an RRM measurement result obtained when the terminal device camps on the cell 1, and/or an RRM measurement result obtained when the terminal device performs cell reselection or cell handover in the cell 1. The RRM measurement result includes, for example, related information of the cell 1, and related information of the cell selected during cell reselection or cell handover.

The network device 11 may determine, based on auxiliary information from at least one terminal device 101, a network selection policy corresponding to the cell 1. Optionally, the network device 11 may learn of the network selection policy through machine learning, deep learning, reinforcement learning, and other manners based on auxiliary information reported by a plurality of terminal devices 101. For example, in a process of learning of the network selection policy, the network device 11 may not determine, as a to-be-measured neighboring cell, a neighboring cell that is not selected when the terminal device 101 camps on the cell 1 and performs cell reselection.

When receiving a network selection policy request from the terminal device 102, the network device 11 may determine, based on an identifier that is of a cell on which the terminal device 102 currently camps and that is carried in the network selection policy request, the cell (for example, the cell 1) on which the terminal device 102 currently camps; and send, to the terminal device 102, the network selection policy corresponding to the cell 1, to indicate a to-be-measured neighboring cell and a measurement manner of each of to-be-measured neighboring cells when the terminal device 102 performs cell reselection in the cell 1. The measurement manner of each neighboring cell is, for example, measurement at a time point at which the terminal device 102 starts measuring the neighboring cell and/or measurement at a time point at which the terminal device 102 stops measuring the neighboring cell.

Alternatively, the network device 11 may determine, based on auxiliary information that is from the terminal device 101 and that is obtained when the terminal device 101 camps on different cells, network selection policies corresponding to the different cells. For example, the terminal device 101 successively camps on the cell 1 and a cell 2. The cell 1 and the cell 2 are, for example, a cell 1 and a cell 2 in the fixed route in FIG. 1. The network device 11 may determine, based on auxiliary information reported when the terminal device 101 camps on the cell 1, a network selection policy corresponding to the cell 1, and determine, based on auxiliary information reported when the terminal device 101 camps on the cell 2, a network selection policy corresponding to the cell 2. When the network device 11 receives a network selection policy request from the terminal device 102, if it is determined, based on the network selection policy request, that the terminal device 102 currently camps on the cell 1, the network device 11 may send, to the terminal device 102, the network selection policy corresponding to the cell 1, or may send, to the terminal device 102, the network selection policy corresponding to the cell 1 and the network selection policy corresponding to the cell 2, to indicate a to-be-measured neighboring cell and a measurement manner of each of to-be-measured neighboring cells when the terminal device 102 performs cell reselection in the cell 1 or the cell 2.

The terminal device 102 receives the network selection policy from the network device 11, and when determining that cell reselection needs to be performed, the terminal device 102 performs cell measurement according to the network selection policy corresponding to the cell on which the terminal device 102 currently camps, to determine a target cell. For example, the terminal device 102 currently camps on the cell 1. When determining that cell reselection needs to be performed, the terminal device 102 may perform cell reselection according to the network selection policy corresponding to the cell 1.

Optionally, after moving from the cell 1 to the cell 2, the terminal device 102 may further determine whether the currently stored network selection policy from the network device 11 includes the network selection policy corresponding to the cell 2. If the network selection policy includes the network selection policy corresponding to the cell 2, the terminal device 102 may directly perform cell reselection according to the network selection policy corresponding to the cell 2. If the network selection policy does not include the network selection policy corresponding to the cell 2, the terminal device 102 may send the network selection policy request to the network device 11 again, and when receiving, from the network device 11, the network selection policy corresponding to the cell 2, perform cell reselection according to the network selection policy corresponding to the cell 2.

In some embodiments, after reselecting a cell according to the network selection policy from the network device 11, the terminal device 102 may further send an execution result of the network selection policy to the network device 11. The execution result is used by the network device 11 to optimize the network selection policy.

In the foregoing embodiment, the network device 11 summarizes the auxiliary information for performing cell reselection by the plurality of terminal devices 101 on the fixed place and/or the fixed route, to obtain, through learning, the network selection policy corresponding to the fixed place and/or the fixed route. This helps improve accuracy of the network selection policy, and may reduce a quantity of cells measured by the another terminal device 102 during cell reselection, reduce a quantity of cells measured by the terminal device 101 during subsequent cell reselection in the same cell, and reduce power consumption of the terminal device.

FIG. 2 is an interaction flowchart of a method for determining a network selection policy according to an embodiment of this application. The method may be implemented by the network device 11 and the terminal device 101 shown in FIG. 1.

S201: The terminal device 101 performs cell measurement according to a locally stored network selection policy to perform cell reselection or cell handover.

The locally stored network selection policy may be a reselection criterion and a handover criterion that are configured by the network device 11, or may be a criterion obtained by performing cell reselection by the terminal device 101 according to the reselection criterion configured by the network device 11 or by performing cell handover based on the handover criterion configured by the network device 11, and optimizes, based on a selection result, the reselection criterion or the handover criterion configured by the network device 11.

When determining that a preset condition is satisfied, the terminal device 101 performs cell measurement according to the locally stored network selection policy to perform cell reselection or cell handover. The preset condition includes, for example, one or more of the following: Signal strength (for example, an RSRP) that is of a cell on which the terminal device 101 currently camps and that is obtained through measurement by the terminal device 101 is less than or equal to preset signal strength (an intra-frequency start threshold and/or an inter-frequency start threshold); a network connection between the terminal device 101 and the cell on which the terminal device 101 currently camps is broken (that is, the foregoing described network dropping); a current communication standard of the terminal device 101 is lower than a communication standard that is at a previous moment (that is, the foregoing described falling into a lower standard); the terminal device 101 camps on at least two cells back and forth (that is, the foregoing described ping-pong event); and/or the terminal device 101 is about to leave the cell on which the terminal device 101 currently camps.

Content indicated by the reselection criterion is used as an example. A process in which the terminal device 101 performs cell measurement according to the reselection criterion to perform cell reselection may include: The terminal device 101 measures the RSRP of the cell (for example, a first cell) on which the terminal device 101 currently camps. When the measured RSRP is equal to or less than -82 dBm, the terminal device 101 performs cell measurement in a sequence of an intra-frequency neighboring cell, an inter-frequency neighboring cell with a higher priority, inter-frequency neighboring cells with a same priority, and an inter-frequency neighboring cell with a lower priority, to determine whether a measured neighboring cell (for example, a neighboring cell 1) satisfies a camping condition. If the measured neighboring cell satisfies the camping condition, the terminal device 101 performs cell reselection and camps on the neighboring cell 1. If the measured neighboring cell does not satisfy the camping condition, the terminal device 101 does not perform cell reselection and does not camp on the neighboring cell 1. For example, the terminal device 101 may determine whether an RSRP of the neighboring cell 1 is greater than a preset RSRP. If the RSRP of the neighboring cell 1 is greater than the preset RSRP, the terminal device 101 performs cell reselection and camps on the neighboring cell 1. If the RSRP of the neighboring cell 1 is less than or equal to the preset RSRP, the terminal device 101 does not perform cell reselection and continues to camp on the first cell.

S202: The terminal device 101 sends auxiliary information to the network device 11. Correspondingly, the network device 11 receives the auxiliary information from the terminal device 101.

Optionally, the terminal device 101 may send the auxiliary information to the network device 11 after performing cell reselection or cell handover, or the terminal device 101 may periodically send the auxiliary information to the network device 11. The auxiliary information is used by the network device 11 to determine a network selection policy for the terminal device camping on the first cell to perform cell reselection or cell handover, for example, a network selection policy corresponding to the first cell. Optionally, the auxiliary information sent by the terminal device 101 to the network device 11 after the terminal device 101 performs cell reselection may include an RRM measurement result obtained when the terminal device 101 camps on the first cell and/or performs cell reselection. The auxiliary information sent by the terminal device 101 to the network device 11 after the terminal device 101 performs cell handover may include an RRM measurement result obtained when the terminal device 101 camps on the first cell and/or performs cell handover.

Optionally, the RRM measurement result for cell reselection may include, for example, a cell identifier of the first cell and one or more of the following: a time point at which the terminal device 101 enters the first cell and/or a time point at which the terminal device 101 leaves the first cell; a reference signal received power RSRP of the first cell that is obtained through measurement when the terminal device 101 camps on the first cell; an RSRP of the first cell that is obtained through measurement when the terminal device 101 leaves the first cell; an identifier of a neighboring cell reselected when the terminal device 101 performs cell reselection; and/or an RSRP of a neighboring cell that is obtained through measurement when the terminal device 101 performs cell reselection. The RRM measurement result for cell handover may include, for example, the cell identifier of the first cell and one or more of the following: the time point at which the terminal device 101 enters the first cell and/or the time point at which the terminal device 101 leaves the first cell; the reference signal received power RSRP of the first cell that is obtained through measurement when the terminal device 101 camps on the first cell; the RSRP of the first cell that is obtained through measurement when the terminal device 101 leaves the first cell; an identifier of a neighboring cell to which the terminal device 101 is handed over when the terminal device 101 performs cell handover; and/or an RSRP of a neighboring cell that is obtained through measurement when the terminal device 101 performs cell handover.

Optionally, the auxiliary information may further include one or more of the following: device type information and/or device model information of the terminal device 101; an abnormal event (for example, the preset condition described in S201) triggering the terminal device 101 to perform cell reselection or cell handover; and/or location information (geographical location information, for example, information about a longitude and a latitude) of the terminal device 101; a moving direction of the terminal device 101; a moving speed of the terminal device 101; first indication information; and/or the like. The first indication information indicates whether the terminal device 101 executes the network selection policy from the network device 11. For example, if the first indication information is 1, it indicates that the terminal device executes the network selection policy from the network device 11; or if the first indication information is 0, it indicates that the terminal device does not execute the network selection policy from the network device 11. In this embodiment of this application, the terminal device 101 did not execute the network selection policy from the network device 11 before. Therefore, if the auxiliary information includes the first indication information, the first indication information is 0.

S203: The network device 11 determines, based on the auxiliary information from the terminal device 101, the network selection policy corresponding to the first cell.

In this embodiment of this application, the network device 11 may receive auxiliary information from different terminal devices. The different terminal devices are, for example, terminal devices that camp on a same cell or different cells and perform cell reselection or cell handover. Each cell corresponds to a different neighboring cell, in other words, the terminal devices camping on the different cells need to measure different neighboring cells when performing cell reselection or cell handover. Therefore, after receiving the auxiliary information from the different terminal devices, the network device 11 may separately summarize the received auxiliary information based on the cells. For example, the network device 11 may obtain, from the received auxiliary information, an identifier of a cell on which each terminal device camps, and summarize, based on the obtained identifier, auxiliary information of terminal devices camping on a same cell, to determine a network selection policy corresponding to each cell. For example, the network device 11 may summarize auxiliary information including the identifier of the first cell, and determine, based on the summarized auxiliary information, the network selection policy corresponding to the first cell. For example, the auxiliary information including the identifier of the first cell is from the terminal device 101. It may be understood that the terminal device 101 may include at least one terminal device.

The network selection policy (for example, a network selection policy 1) corresponding to the first cell may indicate a to-be-measured neighboring cell and a measurement manner of each of to-be-measured neighboring cells when the terminal device camping on the first cell performs cell reselection or cell handover. For example, the network selection policy 1 may include one or more of the following: a parameter of each of to-be-measured neighboring cells corresponding to the first cell; an exit threshold, where the exit threshold indicates a threshold of stopping performing cell measurement according to the network selection policy 1; and/or a quantity of neighboring cells measured in one DRX cycle. For example, the to-be-measured neighboring cell includes a first neighboring cell, and a parameter of the first neighboring cell includes an identifier of the first neighboring cell (for example, a PCI of the first neighboring cell) and a frequency of the first neighboring cell. Optionally, the parameter of the first neighboring cell may further include one or more of the following: a measurement start threshold of the first neighboring cell; a measurement stop threshold of the first neighboring cell; a priority of the first neighboring cell; and/or an RAT of the first neighboring cell. The measurement start threshold indicates a threshold of starting measuring the first neighboring cell, and the measurement stop threshold indicates a threshold of stopping measuring the first neighboring cell.

Optionally, a format (which may also be referred to as a list) of the network selection policy 1 is as follows:
{RSRP_ExitTh, MeaNum_DRX cycle,
[PCI_Nei1, Freq_Nei1, RSRP_StartTh1, RSRP_StopTh1, Priority1, RAT_Nei1],
[PCI_Nei2, Freq_Nei2, RSRP_StartTh2, RSRP_StopTh2, Priority2, RAT_Nei2], ...
[PCI_Neii, Freq_Neii, RSRP_StartThi, RSRP_StopThi, Priorityi, RAT_Neii], ...
[PCI_NeiM, Freq_NeiM, RSRP_StartThM, RSRP_StopThM, PriorityM, RAT_NeiM}.

RSRP_ExitTh represents the exit threshold. MeaNum_DRX cycle represents the quantity of neighboring cells measured in one DRX cycle. Content in [ ] represents the parameter of each of to-be-measured neighboring cells. PCI_Nei1 represents an identifier of the neighboring cell 1 (for example, the first neighboring cell). Freq_Nei1 represents a frequency of the neighboring cell 1. RSRP_StartTh1 represents a measurement start threshold of the neighboring cell 1. RSRP_StopTh1 represents a measurement stop threshold of the neighboring cell 1. Priority 1 represents a priority of the neighboring cell 1. RAT_Nei1 represents a radio access technology, namely, a communication standard, of the neighboring cell 1. PCI_Neii represents an identifier of a neighboring cell i (for example, an i^{th} neighboring cell). Freq_Neii represents a frequency of the neighboring cell i. RSRP_StartThi represents a measurement start threshold of the neighboring cell i. RSRP_StopThi represents a measurement stop threshold of the neighboring cell i. Priorityi represents a priority of the neighboring cell i. RAT_Neii represents a radio access technology of the neighboring cell i.

It may be understood that, in content included in the network selection policy 1, the exit threshold, the quantity of neighboring cells measured in one DRX cycle, and the parameter of each of to-be-measured neighboring cells are optional, and the network selection policy 1 may include one or more of the items. If the network selection policy 1 includes the parameter of each of to-be-measured neighboring cells, the parameter of each neighboring cell includes an identifier and a frequency of the neighboring cell. Optionally, the network selection policy 1 may further include one or more of a measurement start threshold, a measurement stop threshold, an RAT, and a priority.

The content included in the network selection policy 1 is described above. The following describes an implementation in which the network device 11 determines the content in the network selection policy 1 based on auxiliary information from one or more terminal devices 101.

The network device 11 may determine, based on an identifier of a neighboring cell selected when the one or more terminal devices 101 perform cell reselection or cell handover, the to-be-measured neighboring cells corresponding to the first cell. A quantity of to-be-measured neighboring cells is less than or equal to a quantity of neighboring cells of the first cell. The to-be-measured neighboring cells may include an intra-frequency neighboring cell, an inter-frequency neighboring cell, and/or an inter-system neighboring cell of the first cell. For example, the neighboring cells of the first cell include a neighboring cell A, a neighboring cell B, a neighboring cell C, and a neighboring cell D, and neighboring cells selected when a plurality of terminal devices 101 perform cell reselection or cell handover include the neighboring cell A, the neighboring cell B, and the neighboring cell C. The network device 11 may determine the neighboring cell A, the neighboring cell B, and the neighboring cell C as the to-be-measured neighboring cells, but does not determine the neighboring cell D as the to-be-measured neighboring cell. Alternatively, the neighboring cells selected when the terminal device 101 performs cell reselection or cell handover include the neighboring cell A, the neighboring cell B, the neighboring cell C, and the neighboring cell D, but a quantity of terminal devices that select the neighboring cell D is less than a threshold. In this case, the network device 11 may also determine only the neighboring cell A, the neighboring cell B, and the neighboring cell C as the to-be-measured neighboring cells.

Alternatively, the network device 11 may determine, based on an RSRP of a neighboring cell that is obtained through measurement when the one or more terminal devices 101 perform cell reselection or cell handover, the to-be-measured neighboring cells corresponding to the first cell. For example, the auxiliary information that corresponds to the first cell and that is summarized by the network device 11 includes M pieces of auxiliary information from M terminal devices 101, and the M pieces of auxiliary information include an RSRP of a neighboring cell D. If the network device 11 determines that more than N pieces of auxiliary information indicate that the RSRP of the neighboring cell D that is obtained through measurement is lower than a first preset threshold, it is considered that signal strength of the neighboring cell D is low or a signal is unstable. The network device 11 may not use the neighboring cell D as the to-be-measured neighboring cell. For example, the network device 11 does not add the neighboring cell D to a list of the to-be-measured neighboring cells. N/M≥a, and a is, for example, 80%.

Alternatively, the network device 11 may determine, based on an RSRP obtained through measurement by a terminal device camping on each neighboring cell corresponding to the first cell, the to-be-measured neighboring cells corresponding to the first cell. For example, when the network device 11 determines, based on auxiliary information from a terminal device camping on a neighboring cell D, that a probability that an RSRP of a neighboring cell A is less than a first preset threshold is greater than or equal to a, it is considered that signal strength of the neighboring cell D is low or a signal is unstable. The network device 11 may not use the neighboring cell D as the to-be-measured neighboring cell. For example, the network device 11 does not add the neighboring cell D to a list of the to-be-measured neighboring cells. Correspondingly, the RSRP of the first cell that is obtained through measurement when the terminal device 101 camps on the first cell may also be used by the network device 11 to determine whether to use the first cell as a to-be-measured neighboring cell corresponding to a neighboring cell (for example, the neighboring cell A) of the network device 11.

When determining the to-be-measured neighboring cells corresponding to the first cell, the network device 11 may obtain the quantity of to-be-measured neighboring cells corresponding to the first cell, and a frequency and an RAT of each of to-be-measured neighboring cells. For example, the network device 11 may pre-store a mapping relationship between an identifier, a frequency, and an RAT of a cell. After determining the to-be-measured neighboring cells, the network device 11 may determine the frequency and the RAT of each of to-be-measured neighboring cells based on identifiers of the to-be-measured neighboring cells and the mapping relationship. For example, the network device 11 may determine a frequency and an RAT of the neighboring cell A based on an identifier of the neighboring cell A.

The network device 11 may further determine a measurement start threshold and a measurement stop threshold of each of to-be-measured neighboring cells based on an RSRP of the first cell that is obtained through measurement when the terminal device 101 leaves the first cell and the identifier of the neighboring cell selected when the terminal device 101 performs cell reselection or cell handover. For example, the neighboring cell A is selected when a terminal device 1, a terminal device 2, a terminal device 3, and a terminal device 4 perform cell reselection or cell handover. An RSRP of the first cell that is obtained through measurement when the terminal device 1 leaves the first cell is an RSRP 1, an RSRP of the first cell that is obtained through measurement when the terminal device 2 leaves the first cell is an RSRP 2, an RSRP of the first cell that is obtained through measurement when the terminal device 3 leaves the first cell is an RSRP 3, and an RSRP of the first cell that is obtained through measurement when the terminal device 4 leaves the first cell is an RSRP 4. The network device 11 may determine a largest RSRP in the RSRP 1, the RSRP 2, the RSRP 3, and the RSRP 4 as a measurement start threshold of the neighboring cell A, and determine a smallest RSRP as a measurement stop threshold of the neighboring cell A. Alternatively, the network device 11 may determine an average value of the RSRP 1, the RSRP 2, the RSRP 3, and the RSRP 4 as a measurement start threshold of the neighboring cell A, and determine a smallest RSRP as a measurement stop threshold of the neighboring cell A. It is to be noted that the foregoing manner of determining, based on the RSRP obtained through measurement when the terminal device 101 leaves the first cell and the identifier of the neighboring cell that is obtained through measurement when the terminal device 101 performs cell reselection or cell handover, a measurement start threshold and a measurement stop threshold that correspond to the first cell is merely an example. Another determining manner may alternatively be used. For example, the network device 11 sorts the RSRP 1, the RSRP 2, the RSRP 3, and the RSRP 4 in descending order, and determines an RSRP at a middle location as the measurement start threshold of the neighboring cell A. In addition, the network device 11 sorts the to-be-measured neighboring cells in descending order of measurement start thresholds. For example, a sorting result is the neighboring cell A, the neighboring cell B, and the neighboring cell C. The network device 11 determines that a measurement start threshold of the neighboring cell B is the measurement stop threshold of the neighboring cell A.

Optionally, the network device 11 may alternatively sort the neighboring cells in descending order of measurement start thresholds. For example, the format of the network selection policy 1 is a format formed by sorting M neighboring cells in descending order of measurement start thresholds. A value relationship between measurement start thresholds of a neighboring cell 1 to a neighboring cell M is: RSRP_StartTh1≥RSRP_StartTh2≥...≥RSRP_StartThM. It may be understood that sorting the neighboring cells in descending order of measurement start thresholds is equivalent to indicating priorities of measurement performed on the neighboring cells. For example, a neighboring cell with a largest measurement start threshold has a highest priority, and a neighboring cell with a smallest measurement start threshold has a lowest priority. It may be understood that a measurement stop threshold of each neighboring cell may be decoupled from a measurement stop threshold of another neighboring cell. For example, after the M neighboring cells are sorted in descending order of measurement start thresholds, a measurement stop threshold of a neighboring cell ranking second may be greater than a measurement stop threshold of a neighboring cell ranking first, or may be less than or equal to the measurement stop threshold of the neighboring cell ranking first.

Optionally, the network device 11 may further determine, based on a measurement stop threshold of an M^{th} neighboring cell, an exit threshold corresponding to the network selection policy 1. For example, the exit threshold is less than or equal to the measurement stop threshold of the M^{th} neighboring cell. Alternatively, the exit threshold may be a fixed value preset by the network device 11.

Optionally, the network device 11 may further determine a priority of each neighboring cell based on an RSRP obtained through measurement by a terminal device camping on the neighboring cell and/or an RAT of the neighboring cell. For example, if the network device 11 determines, based on auxiliary information from a terminal device camping on the neighboring cell 1, that a probability that the RSRP of the neighboring cell 1 is greater than a second preset threshold is greater than or equal to b, it is considered that signal strength of the neighboring cell 1 is high and stable. In this case, the network device 11 may determine that a priority of the neighboring cell 1 is 7 (a highest priority is 7). If the network device 11 determines, based on the auxiliary information from the terminal device camping on the neighboring cell 1, that a probability that an RSRP of the neighboring cell 2 is greater than the second preset threshold is greater than or equal to c (where b>c), it is considered that signal strength of the neighboring cell 2 is high. In this case, the network device 11 may determine that a priority of the neighboring cell 2 is 6.

Alternatively, the network device 11 may not indicate the priority for each neighboring cell, but indicate priorities only for neighboring cells having a same measurement start threshold. For example, the network device 11 determines whether at least two neighboring cells of the to-be-measured neighboring cells have a same measurement start threshold. If at least two neighboring cells of the to-be-measured neighboring cells have the same measurement start threshold, the network device 11 may indicate priorities of the neighboring cells only in parameters of the at least two neighboring cells. For example, if RSRP_StartTh1 = RSRP_StartTh2, in other words, the neighboring cell 1 and the neighboring cell 2 have a same measurement start threshold, the network device 11 may indicate priorities only in parameters of the neighboring cell 1 and the neighboring cell 2. For example, a format of the network selection policy 1 that indicates the priorities only in the parameters of the neighboring cell 1 and the neighboring cell 2 is as follows:
{RSRP _ExitTh, MeaNum_DRX cycle,
[RSRP_StartTh1, RSRP_StopTh1, Freq_Nei1, PCI Nei1, RATNei1, Priority1],
[RSRP_StartTh2, RSRP_StopTh2, Freq_Nei2, PCI_Nei2, RAT_Nei2, Priority2],
[RSRP_StartTh3, RSRP_StopTh3, Freq_Nei3, PCI_Nei3, RAT_Nei3], ...
[RSRP_StartThM, RSRP_StopThM, Freq_NeiM, PCI_NeiM, RAT_NeiM}.

Optionally, before indicating the priorities of the neighboring cell 1 and the neighboring cell 2, the network device 11 may further determine whether the neighboring cell 1 and the neighboring cell 2 are intra-frequency neighboring cells or inter-frequency neighboring cells. If the neighboring cell 1 and the neighboring cell 2 are intra-frequency neighboring cells, the network device 11 may not indicate the priorities of the neighboring cell 1 and the neighboring cell 2. If the neighboring cell 1 and the neighboring cell 2 are inter-frequency neighboring cells, the network device 11 indicates the priorities of the neighboring cell 1 and the neighboring cell 2.

It is to be noted that the priorities indicated by the network device 11 for the neighboring cell 1 and the neighboring cell 2 are different from the priorities indicated by the reselection criterion or the handover criterion by using a priority list (for example, Table 1). The priority of each neighboring cell in Table 1 is an inherent attribute of the cell. However, in this embodiment of this application, the priorities indicated by the network device 11 for the neighboring cell 1 and the neighboring cell 2 are not inherent attributes of the neighboring cell 1 and the neighboring cell 2, but are variable. For example, the neighboring cell 1 and the neighboring cell 2 are both neighboring cells of the first cell and a second cell. Table 1 indicates that the priority of the neighboring cell 1 is 7 (the highest priority is 7), and the priority of the neighboring cell 3 is 6. In this case, for both the first cell and the second cell, the priority of the neighboring cell 1 is 7 and the priority of the neighboring cell 3 is 6. However, in this embodiment of this application, for the first cell, the priority of the neighboring cell 1 may be 7, and the priority of the neighboring cell 2 may be 6, but for the second cell, the priority of the neighboring cell 1 may be 6, and the priority of the neighboring cell 2 may be 7.

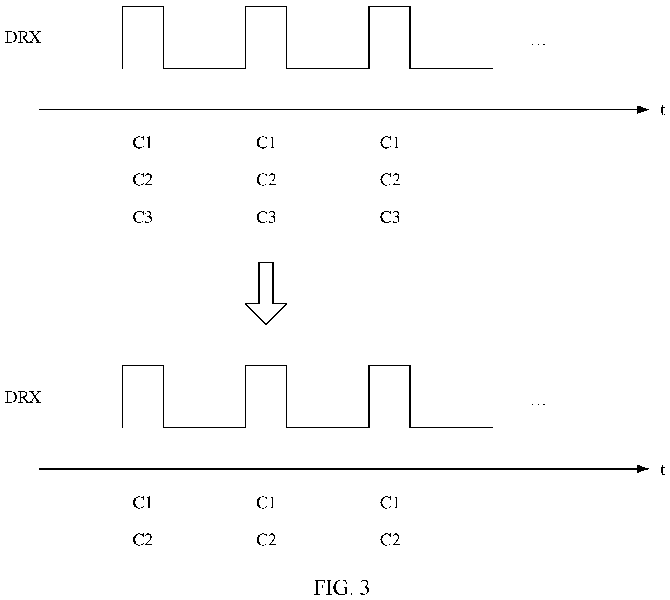

The network device 11 may further determine, based on a quantity of neighboring cells measured when the terminal device 101 selects a neighboring cell, a quantity of neighboring cells measured in one DRX cycle (for example, the foregoing MeaNum_DRX cycle). For example, the terminal device 101 may simultaneously measure seven cells when performing cell measurement. However, the terminal device 101 usually performs a cell reselection or cell handover process when measuring the 3^{rd} or 4^{th} cell. The network device 11 may determine that three neighboring cells or four neighboring cells are measured in one DRX cycle. Refer to FIG. 3. The terminal device 101 may measure three cells (C1, C2, and C3) when performing cell measurement, but the terminal device 101 performs cell reselection or cell handover before measuring C3. Therefore, the network device 11 may determine that two neighboring cells are measured in one DRX cycle. In this way, the quantity of the neighboring cells measured by the terminal device in one DRX cycle is reduced, so that measurement power consumption of the terminal device can be reduced.

The foregoing describes a manner in which the network device 11 determines, based on the auxiliary information (to be specific, the RRM measurement result included in the auxiliary information) from the terminal device 101, the network selection policy corresponding to the cell. In some embodiments, the network device 11 may further determine, based on a device type and/or a device model of the terminal device 101, network selection policies corresponding to different devices, determine, based on the time point at which the terminal device 101 enters the first cell and the time point at which the terminal device 101 leaves the first cell, network selection policies corresponding to different time periods, and/or determine, based on the abnormal event triggering the terminal device 101 to perform cell reselection or cell handover, network selection policies corresponding to different abnormal events, to improve accuracy of the network selection policy, so that a probability that the terminal device that performs cell reselection or cell handover according to the network selection policy selects the target cell is higher, and power consumption of the terminal device is reduced.

For example, the network device 11 may separately summarize auxiliary information from terminal devices of different device types based on the device type information of the terminal device 101, for example, separately summarize auxiliary information from a mobile phone, a band, and a watch, then determine, based on the summarized auxiliary information from the mobile phone, a network selection policy corresponding to the mobile phone, determine, based on the summarized auxiliary information from the band, a network selection policy corresponding to the band, and determine, based on the summarized auxiliary information from the watch, a network selection policy corresponding to the watch.

Alternatively, the network device 11 may separately summarize auxiliary information from terminal devices of different brands based on the device model information of the terminal device 101, for example, separately summarize auxiliary information from mobile phones of a brand 1, a brand 2, and a brand 3, then determine, based on the summarized auxiliary information from the mobile phone of the brand 1, a network selection policy corresponding to the mobile phone of the brand 1, determine, based on the summarized auxiliary information from the mobile phone of the brand 2, a network selection policy corresponding to the brand 2, and determine, based on the summarized auxiliary information from the mobile phone of the brand 3, a network selection policy corresponding to the brand 3. Alternatively, the network device 11 may separately summarize auxiliary information from terminal devices of different models of a same brand based on the device model information of the terminal device 101, for example, separately summarize auxiliary information from mobile phones of the Huawei P series and the Huawei mate series, then determine, based on the summarized auxiliary information from the mobile phone of the Huawei P series, a network selection policy corresponding to the mobile phone of the Huawei P series, and determine, based on the summarized auxiliary information from the mobile phone of the Huawei mate series, a network selection policy corresponding to the mobile phone of the Huawei mate series.

Alternatively, the network device 11 may separately summarize, based on the time point at which the terminal device 101 enters the first cell and/or the time point at which the terminal device 101 leaves the first cell, auxiliary information from terminal devices that perform cell reselection or cell handover in different time periods, to determine network selection policies corresponding to the different time periods. It may be understood that duration corresponding to different time periods may be different. For example, a quantity of people using mobile phones in a time period from 00:00 to 06:00 is small. In this case, to ensure an amount of auxiliary information for determining the network selection policy, 00:00 to 06:00 may be determined as a time period. A quantity of people using mobile phones in a time period from 20:00 to 24:00 is large. To improve accuracy of the network selection policy, every 30 minutes may be determined as a time period.

Alternatively, the network device 11 may determine, based on the event triggering the terminal device 101 to perform cell reselection or cell handover, for example, an abnormal event causing the terminal device 101 to perform cell reselection or cell handover due to a network exception and an event triggering the terminal device 101 to perform cell reselection or cell handover in a normal moving process, network selection policies corresponding to different events. The abnormal event includes, for example, network dropping, falling into a lower standard, a weak signal, or a ping-pong event. For example, the network device 11 may summarize auxiliary information (for example, auxiliary information that does not include the abnormal event in the auxiliary information) from a terminal device that moves normally, to determine a network selection policy corresponding to normal movement; determine, based on auxiliary information from a terminal device that suffers network dropping, a network selection policy corresponding to network dropping; determine, based on auxiliary information from a terminal device that falls into a lower standard, a network selection policy corresponding to falling into a lower standard; and determine, based on auxiliary information from a terminal device on which the ping-pong event occurs, a network selection policy corresponding to the ping-pong event (where for example, at least two cells corresponding to the ping-pong event are not determined as the to-be-measured neighboring cells).

In some embodiments, the network device 11 may alternatively determine a moving route of the terminal device 101 based on the auxiliary information from the terminal device 101. For example, the network device 11 may determine the moving route based on time points at which the terminal device 101 enters a plurality of cells, time points at which the terminal device 101 leaves the plurality of cells, and PCIs of the plurality of cells. For example, a terminal device A enters a cell 1 at a moment t1, leaves the cell 1 at a moment t2, enters a cell 2 at the moment t2, leaves the cell 2 at a moment t3, and enters a cell 3 at the moment t3. The network device 11 may determine a moving route of the terminal device A based on PCIs of the cell 1, the cell 2, and the cell 3.

Alternatively, the network device 11 may determine a moving route based on the location information, the moving speed, and/or the moving direction from the terminal device 101. For example, location information of a terminal device A indicates that the terminal device is currently in a cell 1 and moves toward a direction of a cell 2 at a high speed. The network device 11 may determine the moving route of the terminal device based on PCIs of the cell 1 and the cell 2.

Optionally, the network device 11 may splice, in a cell sequence, network selection policies of cells corresponding to the moving route, to obtain a network selection policy corresponding to the moving route, where the network selection policy is used by the moving terminal device to continuously perform cell reselection or cell handover. Optionally, before splicing, in the cell sequence, the network selection policies of the cells corresponding to the moving route, the network device 11 may further add an identifier of each cell or add an identifier and a frequency of each cell to the network selection policy of each cell. For example, the cells corresponding to the moving route include the cell 1 and the cell 2, and the terminal device first enters the cell 1 and then enters the cell 2. A format formed by splicing a network selection policy of the cell 1 and a network selection policy of the cell 2 is as follows:
{PCI_Ser1, Freq_Ser1, RSRP_ExitTh1, MeaNum_DRX cycle1,
[PCI_Nei1, Freq_Nei1, RSRP_StartTh1, RSRP_StopTh1, Priority1, RAT_Nei1],
[PCI_Nei2, Freq_Nei2, RSRP_StartTh2, RSRP_StopTh2, Priority2, RAT_Nei2], ...
[PCI_NeiM, Freq_NeiM, RSRP_StartThM, RSRP_StopThM, PriorityM, RAT_NeiM};
{PCI_Ser2, Freq_Ser2, RSRP_ExitTh2, MeaNum_DRX cycle2,
[PCI_Nei1, Freq_Nei1, RSRP_StartTh1, RSRP_StopTh1, Priority1, RAT_Nei1],
[PCI_Nei2, Freq_Nei2, RSRP_StartTh2, RSRP_StopTh2, Priority2, RAT_Nei2], ...
[PCI_NeiN, Freq_NeiN, RSRP_StartThN, RSRP_StopThN, PriorityN, RAT_NeiN}.

PCI_Ser1 represents a physical cell identifier of the serving/camped cell 1. Freq_Ser1 represents a frequency of the serving/camped cell 1. PCI_Ser2 represents a physical cell identifier of the serving/camped cell 2. Freq_Ser2 represents a frequency of the serving/camped cell 2. For explanations of other parameters, refer to the explanations of the related parameters in the foregoing embodiment, and details are not described herein again.

Optionally, the terminal device 101 is a terminal device that camps on the first cell for duration greater than first duration. If the duration for which the terminal device 101 camps on the first cell is greater than the first duration, it indicates that the terminal device 101 may be a terminal device resident in the first cell. Accuracy of a network selection policy determined by the network device 11 based on auxiliary information used by the terminal device resident in the first cell to perform cell reselection or cell handover is higher.

Optionally, the network device 11 may further optimize the network selection policy. For example, the network device 11 optimizes the network selection policy 1. The network device 11 may optimize the network selection policy 1 based on a first execution result of another terminal device. The first execution result is an execution result of performing cell reselection or cell handover by the another terminal device according to the network selection policy 1, for example, an execution result of whether a neighboring cell is successfully selected according to the network selection policy 1. It may be understood that the another terminal device may include the terminal device 102 that satisfies a second condition described in the following S501, a terminal device that camped on the first cell before and performed cell reselection or cell handover according to a first network selection policy before (where the first network selection policy stored in the another terminal device does not expire), and the terminal device 101 that camps on the first cell again.

Optionally, the first execution result includes second indication information, indicating whether the another terminal device successfully selects the target cell. For example, if the second indication information is 1, it indicates that a third terminal device successfully selects a cell, or if the second indication information is 0, it indicates that a third terminal device fails to select a cell. The failing to select a cell means that still no cell is selected when the RSRP of the first cell is less than the exit threshold corresponding to the first cell. In this case, the another terminal device may return to perform cell measurement in a preset measurement manner to perform cell reselection or cell handover. The preset measurement manner is, for example, the foregoing reselection criterion.

Optionally, if the another terminal device successfully selects a cell according to the network selection policy 1, the network device 11 may further receive an identifier of the cell selected when the another terminal device performs cell reselection or cell handover, and optimize the network selection policy 1 based on the identifier of the cell, for example, adjust a priority of the cell based on the identifier of the cell. If the another terminal device fails to select the target cell according to the network selection policy 1, the network device 11 may further receive, from the another terminal device, auxiliary information of a process in which cell reselection or cell handover is performed in the preset measurement manner, and optimize the network selection policy 1 based on the auxiliary information, for example, add a neighboring cell selected by the another terminal device to a list of to-be-measured neighboring cells. The identifier of the cell or the auxiliary information received by the network device 11 may be carried in the first execution result, or may be received after the network device 11 sends, to the another terminal device, an indication indicating the another terminal device to report the identifier of the cell or the auxiliary information, or may be periodically reported by the another terminal device. It may be understood that the manner in which the another terminal device sends the auxiliary information to the network device 11 is merely an example, and is not limited.

In the foregoing technical solution, in comparison with the reselection criterion or the handover criterion configured by the network device 11, according to the network selection policy determined based on the measurement result when the terminal device 101 actually camping on the first cell performs cell reselection or cell handover may be used by the network device 11 to filter out a neighboring cell that was not measured successfully before or whose probability of being measured successfully is less than a specific value, that is, the neighboring cell is not used as the to-be-measured neighboring cell. This helps reduce the quantity of to-be-measured neighboring cells when the terminal device performs cell reselection or cell handover, and reduce power consumption of the terminal device. In addition, in the manner in which the network device 11 determines the network selection policy, a terminal that did not camp on the cell before can also obtain a network selection policy with high accuracy.

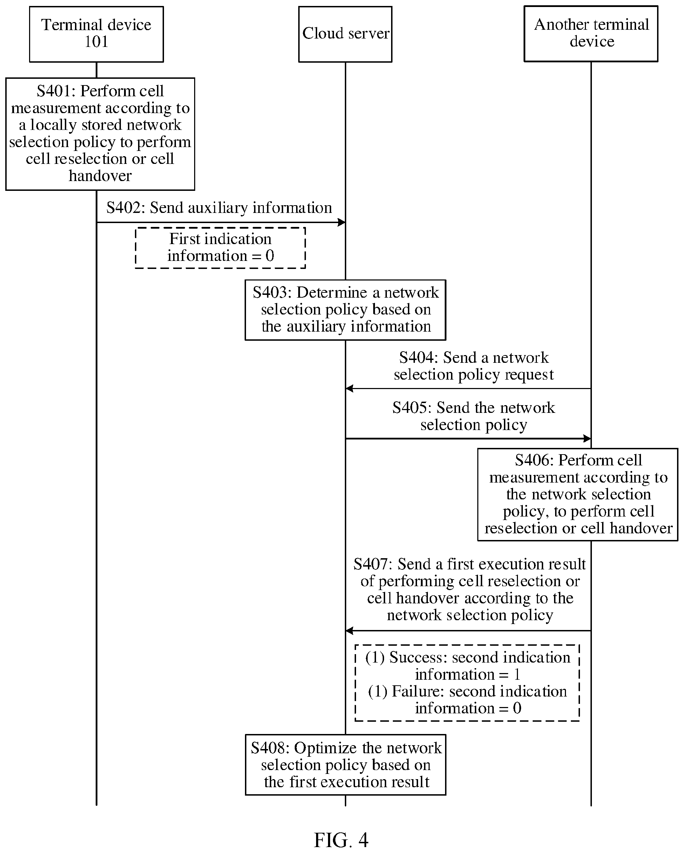

FIG. 4 shows an example of the method for determining a network selection policy by the network device 11 in FIG. 2. In this example, an example in which the network device 11 is a cloud server is used.

S401: A terminal device 101 performs cell measurement according to a locally stored network selection policy to perform cell reselection or cell handover.

S402: The terminal device 101 sends auxiliary information to the cloud server. Correspondingly, the cloud server receives the auxiliary information from the terminal device 101.

In this example, for content included in the auxiliary information, refer to the content included in the auxiliary information in S202. The terminal device 101 may be considered as a terminal device that does not perform cell measurement according to a network selection policy of the cloud server to perform cell reselection or cell handover, and first indication information in the auxiliary information sent by the terminal device 101 to the cloud server is 0.

S403: The cloud server determines a network selection policy based on the auxiliary information.

For a process in which the cloud server determines the network selection policy based on the auxiliary information, refer to the process in which the network device 11 determines the network selection policy based on the auxiliary information in S203. After S403, the cloud server may provide the network selection policy for another terminal device. In other words, the method in this embodiment may further include the following steps.

S404: The another terminal device sends a network selection policy request to the cloud server. Correspondingly, the cloud server receives the network selection policy request from the another terminal device.

S405: The cloud server sends the network selection policy to the another terminal device. Correspondingly, the another terminal device receives the network selection policy from the cloud server.

S406: The another terminal device performs cell measurement according to the network selection policy to perform cell reselection or cell handover.

For example, for a process in which the another terminal device performs cell measurement to perform cell reselection or cell handover, refer to a process in which the terminal device 102 performs cell reselection or cell handover in S503 described below.

S407: The another terminal device sends, to the cloud server, a first execution result of performing cell reselection or cell handover according to the network selection policy. Correspondingly, the cloud server receives the first execution result of the another terminal device.

S408: The cloud server optimizes the network selection policy based on the first execution result.

For a process in which the cloud server optimizes the network selection policy based on the first execution result, refer to the process in which the network device 11 optimizes the network selection policy 1 based on the first execution result in S203.

In the foregoing example, the cloud server determines the network selection policy based on the auxiliary information from the terminal device 101, sends the determined network selection policy to the another terminal device when receiving the network selection policy request from the another terminal device, and optimizes the network selection policy based on the execution result of the another terminal device, so that accuracy of the network selection policy can be improved.

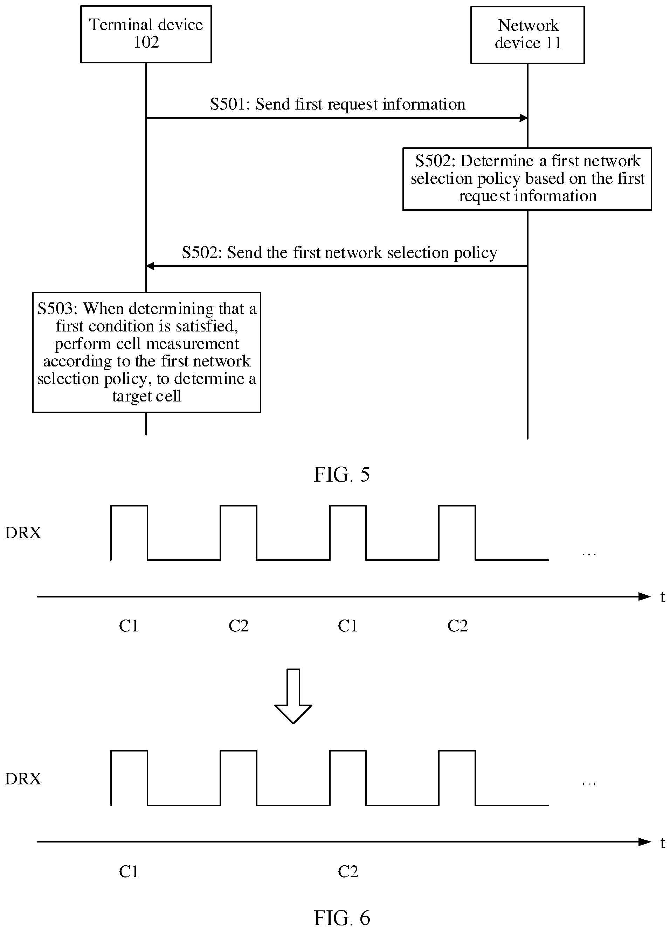

FIG. 5 is a flowchart of a communication method according to an embodiment of this application. The method may be implemented by the terminal device 102 and the network device 11 shown in FIG. 1.

S501: The terminal device 102 sends first request information to the network device 11. Correspondingly, the network device 11 receives the first request information from the terminal device 102.

The terminal device 102 (for example, may also be referred to as a first terminal device) may be a terminal device that satisfies a second condition in the another terminal device, or may be the terminal device 101 (for example, may also be referred to as a second terminal device) that camps on the first cell again in the another terminal device. When camping on the first cell, the terminal device 102 may determine whether to request, from the network device 11, the network selection policy corresponding to the first cell. For example, the terminal device 102 may determine whether the second condition is satisfied. If the second condition is satisfied, the terminal device 101 sends the first request information to the network device 11, to request to obtain the network selection policy corresponding to the first cell. The first request information includes an identifier of the first cell.

Optionally, the second condition includes, for example, one or more of the following: the first cell is a cell on which the terminal device 102 did not camp before; and/or the terminal device 102 stores no network selection policy from the network device 11; and/or the terminal device 102 stores a second network selection policy from the network device 11, and storage duration of the second network selection policy is greater than or equal to second duration.

If the terminal device 102 did not camp on the first cell before, the terminal device 102 needs to perform cell reselection or cell handover based on the foregoing reselection criterion or handover criterion, that is, needs to measure all neighboring cells corresponding to the first cell. In addition, the terminal device 102 needs to simultaneously start measuring all the neighboring cells corresponding to the first cell, and power consumption of the terminal device is high. Therefore, the terminal device 102 may send the first request information to the network device 11, to obtain the network selection policy corresponding to the first cell, so as to perform cell reselection or cell handover.

If the terminal device 102 camped on the first cell before, but the terminal device 102 stores no the network selection policy of the first cell from the network device 11, when performing cell reselection, the terminal device 102 may perform cell reselection based on the foregoing reselection criterion or a criterion obtained by optimizing the reselection criterion, or when performing cell handover, the terminal device 102 may perform cell handover based on the foregoing handover criterion or a criterion obtained by optimizing the handover criterion. The reselection criterion is optimized by the terminal device 102 based on historical data of cell reselection performed by the terminal device 102, and the handover criterion is optimized by the terminal device 102 based on historical data of cell handover performed by the terminal device 102. In a process of optimizing the reselection criterion or the handover criterion by the terminal device 102, an amount of reference data may be small (for example, the terminal device 102 camps on the first cell for a small quantity of times or short duration), resulting in low accuracy of the optimized reselection criterion or handover criterion. Therefore, the terminal device 102 may send the first request information to the network device 11, to obtain the network selection policy corresponding to the first cell, so as to perform cell reselection or cell handover.

If the terminal device 102 camped on the first cell before, and the terminal device 102 stores the second network selection policy from the terminal device 101, but the storage duration of the second network selection policy is greater than the second duration, it indicates that accuracy of the second network selection policy may be low. Therefore, the terminal device 102 may send the first request information to the network device 11, to obtain the network selection policy corresponding to the first cell, so as to perform cell reselection or cell handover.

Optionally, the first request information may further include one or more of the following: device type information and/or device model information of the terminal device 102; and/or location information (geographical location information, for example, information about coordinates of a longitude and a latitude) of the terminal device 102; and/or a moving direction of the terminal device 102, and/or a moving speed of the terminal device 102. The first request information is for obtaining a more targeted network selection policy.

S502: The network device 11 determines a first network selection policy based on the first request information, and sends the first network selection policy to the terminal device 102. Correspondingly, the terminal device 102 receives the first network selection policy from the network device 11.

As described above, the first request information may include one or more pieces of information. If the first request information includes only the identifier of the first cell, the network device 11 may determine, as the first network selection policy, the network selection policy (namely, the network selection policy 1) that corresponds to the first cell and that is obtained in S203. If the first request information further includes the device type information (for example, a mobile phone) of the terminal device 102, the network device 11 may determine, as the first network selection policy, the network selection policy that corresponds to the mobile phone and that is obtained in S203, and/or if the first request information further includes the device model information (for example, the device model information indicates that the terminal device 102 is the mobile phone of the Huawei P series) of the terminal device 102, the network device 11 may determine, as the first network selection policy, the network selection policy that corresponds to the mobile phone of Huawei (for example, the brand 1) and that is obtained in S203. Alternatively, if the first request information includes the location information, the moving direction, and/or the moving speed of the terminal device 102, the network device 11 may determine a possible moving route of the terminal device 102 based on the location information, the moving direction, and/or the moving speed, and determine, as the first network selection policy, the network selection policy that corresponds to the moving route and that is determined by the network device 11 in S203. In this case, the first network selection policy includes a network selection policy corresponding to each cell of at least one cell (for example, K cells, where K≥1) corresponding to the moving route. The K cells include the first cell and K-1 cells on which the terminal device 102 is about to camp, and K is an integer greater than or equal to 1.

Optionally, the network device 11 may further determine, based on a moment at which the first request information is received, that a network selection policy corresponding to a time period in which the moment is located is the first network selection policy.

Optionally, the network device 11 may further determine, based on the location information, the moving speed, and/or the moving direction of the terminal device 102, a measurement cycle for measuring each of to-be-measured neighboring cells (for example, determine whether the measurement cycle for measuring each neighboring cell needs to be prolonged). For example, if the moving speed of the terminal device 102 is greater than or equal to a preset speed, it indicates that a change amount of an RSRP that is of the first cell and that is obtained through measurement by the terminal device 102 is large. In this case, to improve a probability that the terminal device 102 selects a target cell, the to-be-measured neighboring cells need to be measured frequently. In this case, the network device 11 may determine that the measurement cycle for measuring each of to-be-measured neighboring cells does not need to be prolonged. For example, the network device 11 may determine that the measurement cycle for measuring each of to-be-measured neighboring cells is a first value. The first value is, for example, a default value (for example, 1 ms) of the measurement cycle in which the terminal device measures each neighboring cell. If the moving speed of the terminal device 102 is less than the preset speed, it indicates that the change amount of the RSRP that is of the first cell and that is obtained through measurement by the terminal device 102 is small. Even if the terminal device 102 frequently measures each of to-be-measured neighboring cells, the target cell may not be selected. In this case, to reduce the power consumption of the terminal device 102, the network device 11 may prolong the measurement cycle for measuring each of to-be-measured neighboring cells. For example, the network device 11 may determine that the measurement cycle for measuring each of to-be-measured neighboring cells is a second value (for example, 3 ms). Optionally, the first value and/or the second value may alternatively be indicated by a parameter of a DRX cycle. For example, an interval between measurement of different neighboring cells is several DRX cycles. Optionally, when the measurement cycle is indicated by the parameter of the DRX cycle, the network selection policy corresponding to the first cell may further include duration of one DRX cycle. For example, the duration of one DRX cycle is 1 ms. The first value is, for example, one DRX cycle, and the second value is, for example, three DRX cycles. FIG. 6 is a diagram of prolonging, by the network device 11, a measurement cycle for measuring a C1 and a C2.

After determining the measurement cycle for measuring each of to-be-measured neighboring cells, the network device 11 may add the measurement cycle corresponding to each neighboring cell to a parameter of each neighboring cell in the first network selection policy. Optionally, the first network selection policy may be a network selection policy determined by the network device 11 based on the auxiliary information from the terminal device 101, or may be a network selection policy obtained by performing M times of optimization on the first network selection policy by the network device 11 based on the first execution result of another terminal device (for example, which may also be referred to as a third terminal device) in S203. M is a quantity of times for which the network device 11 optimizes the first network selection policy before receiving the first request information from the terminal device 102.

Optionally, for example, the first network selection policy is the foregoing network selection policy 1. A format of the network selection policy 1 to which the measurement cycle is added is as follows:
{Freq_Ser, PCI_Ser, Nei_Num, RSRP_ExitTh, MeaNum_DRX cycle,
[RSRP_StartTh1, RSRP_StopTh1, Freq_Nei1, PCI_Nei1, Priority1, RAT_Nei1, T_Nei1],
[RSRP_StartTh2, RSRP_StopTh2, Freq_Nei2, PCI_Nei2, Priority2, RAT_Nei2, T_Nei2], ...
[RSRP_StartThM, RSRP_StopThM, Freq_NeiM, PCI_NeiM, PriorityM, RAT_NeiM, T_NeiM}.

T_Nei1 indicates a measurement cycle for measuring the neighboring cell 1.

After determining the first network selection policy, the network device 11 sends the determined first network selection policy to the terminal device 102. Optionally, if the first network selection policy determined by the network device 11 is the network selection policy corresponding to the moving route, and the K cells corresponding to the moving route sequentially include the first cell, a third cell, and a fourth cell, the network device 11 may send only the network selection policy corresponding to the first cell in the first network selection policy to the terminal device 102. When it is determined, based on the location information, the moving speed, and the moving direction of the terminal device 102, that the terminal device 102 is about to enter the third cell, a network selection policy corresponding to the third cell is sent to the terminal device 102. When it is determined that the terminal device 102 is about to enter the fourth cell, a network selection policy corresponding to the fourth cell is sent to the terminal device 102. Alternatively, when receiving request information that is from the terminal device 102 and that is for requesting a network selection policy corresponding to the third cell or the fourth cell, the network device 11 may send the network selection policy corresponding to the third cell or the fourth cell to the terminal device 102.

S503: When determining that a first condition is satisfied, the terminal device 102 performs cell measurement according to the first network selection policy, to determine the target cell.

The first condition is an event triggering the terminal device 102 to perform cell reselection or cell handover, for example, an abnormal event causing the terminal device 102 to perform cell reselection or cell handover due to a network exception and an event triggering the terminal device 102 to perform cell reselection or cell handover in a normal moving process. The abnormal event includes, for example, the network dropping, the falling into a lower standard, a weak signal, or the ping-pong event.

When determining that a current condition satisfies the first condition, the terminal device 102 may perform cell measurement based on information included in the first network selection policy.

For example, if the first network selection policy includes the parameter of each neighboring cell, and the parameter includes only a cell identifier and a frequency of the to-be-measured neighboring cell, the terminal device 102 may perform measurement based on the frequency and the identifier. For example, the terminal device 102 may obtain, based on the frequency and the identifier, information such as a priority, an intra-frequency start threshold, and an inter-frequency start threshold of the to-be-measured neighboring cell from the content indicated by the reselection criterion or the handover criterion configured by the network device 11, and perform cell measurement based on the obtained information, to perform cell reselection or cell handover. It may be understood that a quantity of to-be-measured neighboring cells is less than or equal to a quantity of neighboring cells indicated in the reselection criterion or the handover criterion. In comparison with performing cell measurement directly based on the locally stored reselection criterion or handover criterion, the terminal device 102 performs cell measurement based on the identifier and the frequency of the to-be-measured neighboring cell that are sent by the network device 11 and the locally stored reselection criterion or handover criterion, so that the quantity of to-be-measured neighboring cells may be reduced, and the power consumption of the terminal device may be reduced.

Optionally, if the parameter of each neighboring cell further includes the measurement start threshold and/or the measurement stop threshold of each neighboring cell, when the RSRP of the first cell that is obtained through measurement reaches a measurement start threshold of a neighboring cell, the terminal device 102 starts measuring the neighboring cell, and/or when the RSRP of the first cell that is obtained through measurement reaches a measurement stop threshold of a neighboring cell, the terminal device 102 stops measuring the neighboring cell.

Optionally, if the parameter of each neighboring cell further includes the RAT of each neighboring cell, the terminal device 102 may further perform measurement based on the RAT of each neighboring cell. For example, the terminal device 102 may preferentially measure a neighboring cell with a high RAT, and then measure a neighboring cell with a low RAT.

Optionally, if the parameter of each neighboring cell further includes the measurement cycle for measuring each neighboring cell, for example, a measurement cycle corresponding to the neighboring cell 1 is two DRX cycles, the terminal device 102 may measure the neighboring cell 1 every two DRX cycles. If the first network selection policy includes the priority of each neighboring cell, the terminal device 102 may measure each neighboring cell in descending order of priorities.

Optionally, if the parameter of each neighboring cell further includes the priority of each neighboring cell, the terminal device 102 measures each neighboring cell based on a sequence indicated by the priority.

Optionally, if the parameter of each neighboring cell includes both the measurement start threshold and the priority of each neighboring cell, and the measurement start thresholds of all the neighboring cells are different, the terminal device 102 may determine, based on the measurement start threshold and/or the priority of each neighboring cell, a sequence of measuring each neighboring cell, and measure each neighboring cell based on the sequence. For example, the to-be-measured neighboring cells indicated by the first network selection policy include a neighboring cell 1, a neighboring cell 2, and a neighboring cell 3. Measurement start thresholds corresponding to the neighboring cell 1, the neighboring cell 2, and the neighboring cell 3 are RSRP_StartTh1, RSRP_StartTh2, and RSRP_StartTh3, respectively, and priorities corresponding to the neighboring cell 1, the neighboring cell 2, and the neighboring cell 3 are Priority1, Priority2, and Priority3 respectively. If RSRP_StartTh1 > RSRP_StartTh2 > RSRP_StartTh3, the terminal device 102 may directly determine, based on the measurement start threshold of each neighboring cell without considering the priorities of the neighboring cell 1, the neighboring cell 2, and the neighboring cell 3, that a sequence of measuring the three neighboring cells is: the neighboring cell 1, the neighboring cell 2, and the neighboring cell 3. If RSRP_StartTh1 > RSRP_StartTh2 = RSRP_StartTh3, because the measurement start thresholds of the neighboring cell 2 and the neighboring cell 3 are the same, the terminal device 102 needs to determine, based on the measurement start threshold and the priority of each neighboring cell, a sequence of measuring the three neighboring cells. For example, if Priority2 < Priority3, the terminal device 102 determines, based on the measurement start threshold and the priority of each neighboring cell, that the sequence of measuring the three neighboring cells is: the neighboring cell 1, the neighboring cell 3, and the neighboring cell 2. If RSRP_StartTh1 = RSRP_StartTh2 = RSRP_StartTh3, the terminal device 102 cannot determine, based on the measurement start threshold of each neighboring cell, a sequence of measuring the three neighboring cells, and needs to determine, based on the priorities of the three neighboring cells, the sequence of measuring the three neighboring cells. For example, if Priority 1 < Priority 2 < Priority 3, the terminal device 102 determines, based on the measurement start threshold of each neighboring cell, that the sequence of measuring the three neighboring cells is: the neighboring cell 3, the neighboring cell 2, and the neighboring cell 1. In other words, if the first network selection policy includes both the measurement start threshold and the priority of each neighboring cell, the terminal device 102 may first determine whether the sequence of measuring each neighboring cell can be determined based on the measurement start threshold. When the sequence of measuring each neighboring cell cannot be determined based on the measurement start threshold, the terminal device 102 determines, based on the priority, the sequence of measuring each neighboring cell. For example, the terminal device 102 may determine whether at least two neighboring cells of the to-be-measured neighboring cells have a same measurement start threshold. If at least two neighboring cells have a same measurement start threshold, the terminal device 102 may determine, based on priorities of the at least two neighboring cells, a sequence of measuring the at least two neighboring cells.

If the first network selection policy includes the exit threshold, if the terminal device 102 fails to select a cell when the RSRP value of the first cell reaches the exit threshold, the terminal device 102 may perform cell reselection based on the foregoing reselection criterion or a criterion obtained by optimizing the reselection criterion, or by performing cell handover based on the foregoing handover criterion or a criterion obtained by optimizing the handover criterion.

If the first network selection policy includes the quantity of neighboring cells measured in one DRX cycle, for example, the first network selection policy indicates that two neighboring cells are measured in one DRX cycle, the terminal device 102 measures only two neighboring cells in one DRX cycle, and measures, in a next DRX cycle, the remaining neighboring cells that are not measured. For example, if the terminal device 102 needs to measure four neighboring cells in total, the terminal device 102 measures two neighboring cells in the 1^{st} DRX cycle, and measures the remaining two neighboring cells in the 2^{nd} DRX cycle.

Optionally, if the quantity is greater than or equal to 2, that is, the terminal device 102 needs to measure at least two neighboring cells in one cycle, the terminal device 102 may further determine whether the two neighboring cells include an inter-frequency neighboring cell. If the at least two neighboring cells include the inter-frequency neighboring cell, the terminal device 102 may further determine duration for measuring each neighboring cell. For example, when one DRX cycle is 2 ms, the terminal device 102 needs to measure two neighboring cells in one DRX cycle, and one of the two neighboring cells that need to be measured is an inter-frequency neighboring cell, the terminal device 102 may determine that duration for measuring each of the two neighboring cells is 1 ms, or the terminal device 102 may determine that duration for measuring one of the two neighboring cells is 0.8 ms, and duration for measuring the other neighboring cell is 1.2 ms. The duration for measuring each neighboring cell by the terminal device 102 may be determined based on the priority of each neighboring cell. For example, if a priority of a neighboring cell 1 is higher than that of a neighboring cell 2, the terminal device 102 may determine that duration for measuring the neighboring cell 1 is greater than duration for measuring the neighboring cell 2.

Optionally, after performing cell measurement according to the first network selection policy, the terminal device 102 may further send the first execution result of the first network selection policy to the network device 11, so that the network device 11 optimizes the first network selection policy based on the first execution result. For the first execution result sent by the terminal device 102 to the network device 11, refer to the related embodiment in which the third terminal device sends the first execution result to the network device 11 in S203. Details are not described herein again.

In the foregoing technical solution, when performing cell reselection or cell handover, the terminal device 102 needs to measure only the neighboring cell indicated in the first network selection policy, and does not need to measure a neighboring cell that is not indicated in the first network selection policy, so that a quantity of neighboring cells that need to be measured by the terminal device 102 is reduced, and the power consumption of the terminal device 102 is reduced. In addition, the terminal device 102 measures each neighboring cell based on the measurement start threshold of each of to-be-measured neighboring cells, so that a probability of measuring a neighboring cell excessively early or excessively late can be reduced, and the power consumption of the terminal device can be further reduced when performance is ensured.

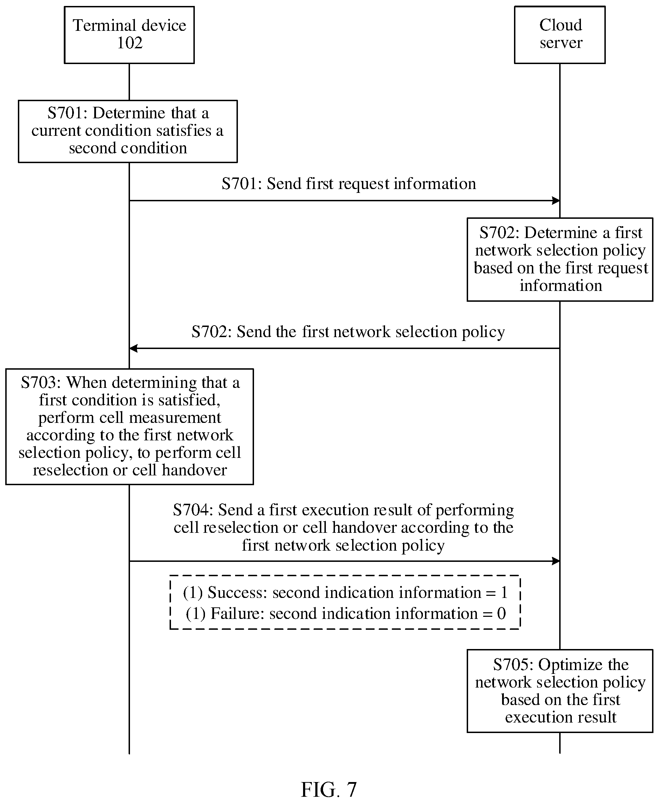

The following describes an embodiment by using FIG. 7. This embodiment is an example of the communication method in FIG. 5. In this example, an example in which the network device 11 is a cloud server is used.

S701: When determining that a current condition satisfies a second condition, the terminal device 102 sends first request information to the cloud server. Correspondingly, the cloud server receives the first request information from the terminal device 102.

S702: The cloud server determines a first network selection policy based on the first request information, and sends the first network selection policy to the terminal device 102. Correspondingly, the terminal device 102 receives the first network selection policy from the cloud server.

For a process in which the cloud server determines the first network selection policy based on the first request information, refer to the process in which the network device 11 determines the first network selection policy based on the first request information in S502.

S703: When determining that a first condition is satisfied, the terminal device 102 performs cell measurement according to the first network selection policy, to perform cell reselection or cell handover.

For specific content included in the first condition, refer to the content of the first condition in S503.

S704: The terminal device 102 sends, to the cloud server, a first execution result of performing cell reselection or cell handover according to the first network selection policy. Correspondingly, the cloud server receives the first execution result of the terminal device 102.

For content included in the first execution result, refer to the content included in the first execution result in S503. For example, if the terminal device 102 successfully selects a cell according to the first network selection policy, second indication information in the first execution result is 1. If the terminal device 102 fails to select a cell according to the first network selection policy, the second indication information in the first execution result is 0.

S705: The cloud server optimizes the first network selection policy based on the first execution result.

For a process in which the cloud server optimizes the first network selection policy based on the first execution result, refer to the process in which the network device optimizes the first network selection policy based on the first execution result in S503.

In the foregoing example, when determining that there is no network selection policy from the network device 11, the terminal device 102 may request, from the network device 11, the network selection policy optimized by the network device 11, so that a quantity of measured neighboring cells can be reduced, and power consumption of the terminal device is reduced.

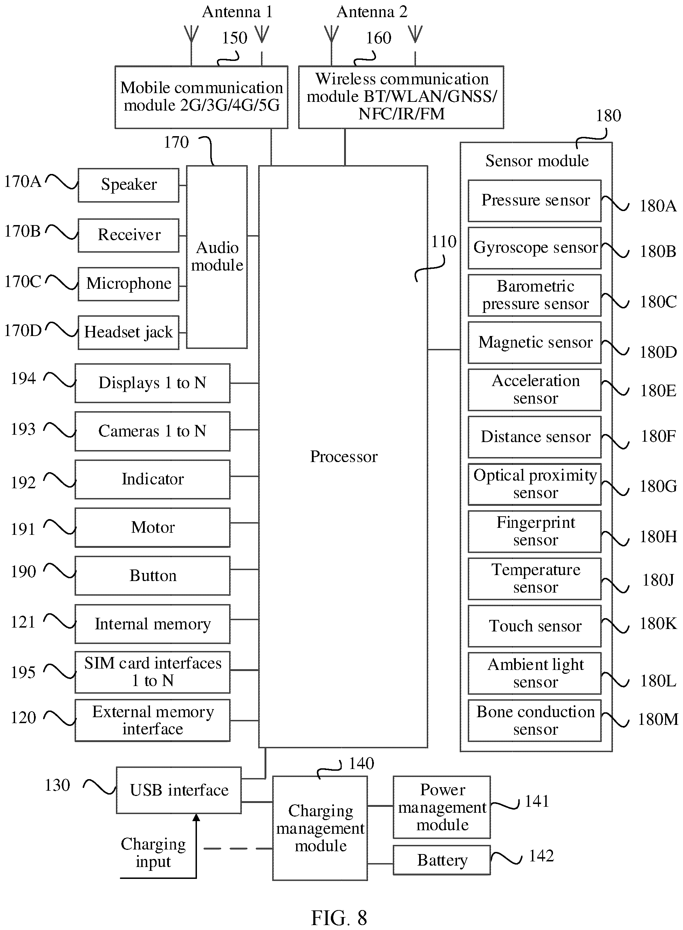

FIG. 8 is a diagram of a structure of a terminal device according to an embodiment of this application. As shown in FIG. 8, the terminal device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem (modem), a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the terminal device. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data that is just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the terminal device, or may be configured to transmit data between the terminal device and a peripheral device. The charging management module 140 is configured to receive charging input from a charger. The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the terminal device may be implemented by using the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the terminal device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the terminal device and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution, applied to the terminal device, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal device is coupled to the mobile communication module 150, and the antenna 2 is coupled to the wireless communication module 160, so that the terminal device can communicate with a network and other devices by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The display 194 is configured to display a display interface of an application, for example, a viewfinder interface of a camera application. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device may include one or N displays 194, and N is a positive integer greater than 1.

The terminal device may implement an image shooting function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV

In this embodiment of this application, the terminal device may include N cameras 193 (for example, arrayed cameras), where N is an integer greater than or equal to 2.

The digital signal processor is configured to process a digital signal, and may process another digital signal in addition to the digital image signal. For example, when the terminal device selects a frequency, the digital signal processor is configured to perform Fourier transformation on frequency energy.

The video codec is configured to compress or decompress a digital video. The terminal device may support one or more types of video codecs. In this way, the terminal device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure like a transmission mode between neurons in a human brain to perform rapid processing on input information, and can perform continuous self-learning. Applications such as intelligent cognition of the terminal device, for example, image recognition, facial recognition, voice recognition, and text understanding, may be implemented through the NPU.

The internal memory 121 may be configured to store computer-executable program code. The executable program code includes instructions. The processor 110 runs the instructions stored in the internal memory 121, to perform various function applications and data processing of the terminal device. The internal memory 121 may include a program storage area and a data storage area. The program storage area may store an operating system, software code of at least one application (for example, iQIYI or WeChat), and the like. The data storage area may store data (for example, a shot image or a recorded video) or the like generated when the terminal device is used. In addition, the internal memory 121 may include a high-speed random access memory, or may include a nonvolatile memory, for example, at least one magnetic disk storage device, a flash memory, or a universal flash storage (universal flash storage, UFS).

The external memory interface 120 may be configured to connect to an external memory card, for example, a micro-SD card, to extend a storage capability of the terminal device. The external memory card communicates with the processor 110 through the external memory interface 120, to implement a data storage function. For example, files such as pictures or videos are stored in the external memory card.

The internal memory 121 or the external memory may store one or more computer programs. The one or more computer programs include instructions. When the instructions are executed by the processor 110, the terminal device is enabled to perform the methods provided in FIG. 1 to FIG. 5.

The terminal device may implement an audio function such as music playing and recording through the audio module 170, the speaker 170A, the receiver 170B, the microphone 170C, the headset jack 170D, the application processor, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. The gyroscope sensor 180B may be configured to determine a body posture of the terminal device. In some embodiments, an angular velocity of the terminal device around three axes (namely, axes x, y, and z) may be determined by using the gyroscope sensor 180B.

The barometric pressure sensor 180C is configured to measure barometric pressure. In some embodiments, the terminal device calculates an altitude based on a barometric pressure value measured by the barometric pressure sensor 180C, to assist in positioning and navigation. The magnetic sensor 180D includes a Hall sensor. The terminal device may use the magnetic sensor 180D to detect opening/closing of a flip case. In some embodiments, when the terminal device is a flip phone, the terminal device may detect opening and closing of a flip cover by using the magnetic sensor 180D. Further, a feature such as automatic unlocking of the flip cover is set based on a detected opening or closing state of the leather case or a detected opening or closing state of the flip cover. The acceleration sensor 180E may detect sizes of acceleration of the terminal device in various directions (usually in three axial directions). When the terminal device is still, the acceleration sensor 180E may detect a gravity size and a gravity direction. The acceleration sensor 180E may be further configured to identify a posture of the terminal device, and is used in an application such as switching between a landscape mode and a portrait mode or a pedometer.

The distance sensor 180F is configured to measure a distance. The terminal device may measure a distance by using infrared light or a laser. In some embodiments, in a shooting scenario, the terminal device may perform ranging by using the distance sensor 180F, to implement fast focusing. The optical proximity sensor 180G may include, for example, a light emitting diode (LED) and an optical detector, for example, a photodiode. The light emitting diode may be an infrared light emitting diode. The terminal device emits infrared light outwards by using the light emitting diode. The terminal device detects infrared reflected light from a nearby object by using the photodiode. When sufficient reflected light is detected, the terminal device may determine that there is an object near the terminal device. When insufficient reflected light is detected, the terminal device may determine that there is no object near the terminal device. The terminal device may detect, by using the optical proximity sensor 180G, that a user holds the terminal device close to an ear for a call, so that the terminal device automatically turns off the screen to save power. The optical proximity sensor 180G may also be used in a smart cover mode or a pocket mode to automatically perform screen unlocking or locking.

The ambient light sensor 180L is configured to sense ambient light brightness. The terminal device may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the terminal device is in a pocket, to avoid an accidental touch. The fingerprint sensor 180H is configured to collect a fingerprint. The terminal device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device executes a temperature processing policy based on the temperature detected by the temperature sensor 180J. For example, when the temperature reported by the temperature sensor 180J exceeds a threshold, the terminal device lowers performance of a processor located near the temperature sensor 180J, to reduce power consumption to implement thermal protection. In some other embodiments, when the temperature is less than another threshold, the terminal device heats the battery 142 to prevent the terminal device from being abnormally powered off because of a low temperature. In some other embodiments, when the temperature is less than still another threshold, the terminal device boosts an output voltage of the battery 142, to prevent abnormal power-off caused by a low temperature.

The touch sensor 180K is also referred to as a touch panel. The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the terminal device at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal.

The button 190 includes a power button, a volume button, and the like. The button 190 may be a mechanical button, or may be a touch button. The terminal device may receive a button input, and generate a button signal input related to a user setting and function control of the terminal device. The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. A touch vibration feedback effect may be further customized. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the terminal device.

It may be understood that the components shown in FIG. 8 do not constitute a specific limitation on the terminal device. The mobile phone may further include more or fewer components than those shown in the figure, or combine some components, or split some components, or have different component arrangements. In addition, a combination/connection relationship between the components in FIG. 8 may also be adjusted and modified.

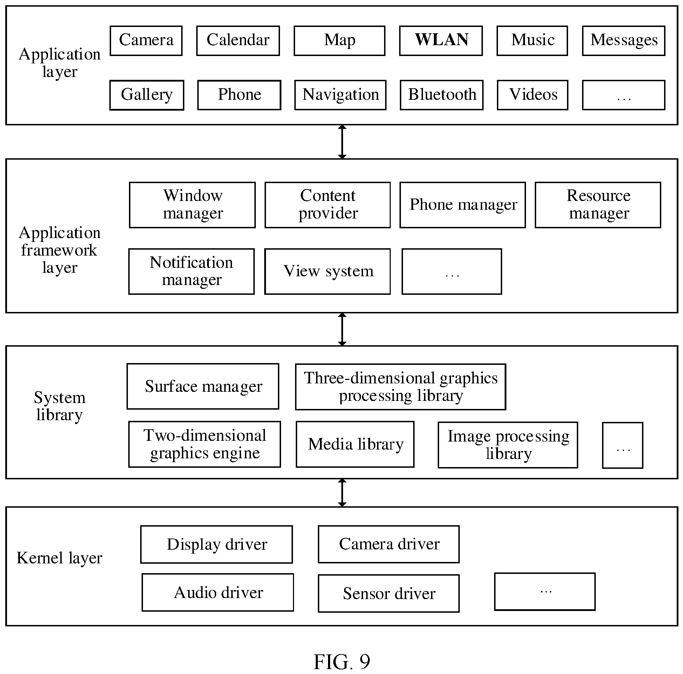

FIG. 9 is a diagram of a layered architecture of a terminal device according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages. As shown in FIG. 9, the application packages may include applications such as Camera, Gallery, Calendar, Phone, Map, Navigation, WLAN, Bluetooth, Music, Videos, and Messages. The application framework layer provides an application programming interface (application programming interface, API) and a programming framework for an application at the application layer. The application framework layer includes some predefined functions.

As shown in FIG. 9, the application framework layer may include a window manager, a content provider, a view system, a phone manager, a resource manager, a notification manager, and the like. The window manager is configured to manage a window program. The window manager may obtain a size of the display, determine whether there is a status bar, perform screen locking, take a screenshot, and the like. The content provider is configured to: store and obtain data, and enable the data to be accessed by an application program. The data may include a video, an image, audio, calls that are made and answered, a browsing history and bookmarks, an address book, and the like. The view system includes visual controls such as a control for displaying a text and a control for displaying an image. The view system may be configured to construct an application program. A display interface may include one or more views. For example, a display interface including an SMS message notification icon may include a text display view and an image display view. The phone manager is configured to provide a communication function of the terminal device, for example, management of a call status (including answering, declining, or the like). The resource manager provides various resources such as a localized character string, an icon, an image, a layout file, and a video file for an application. The notification manager enables an application program to display notification information in a status bar, and may be configured to convey a notification-type message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a core library and a virtual machine. The Android runtime is responsible for scheduling and management of the Android system. The kernel library includes two parts: a function that needs to be called in Java language and a kernel library of Android. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording in a plurality of commonly used audio and video formats, and static image files. The media library may support a plurality of audio and video encoding formats such as MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It may be understood that the software structure shown in FIG. 8 does not constitute a specific limitation on the software structure of the terminal device. For example, the terminal device may include more or fewer layers than those in FIG. 8. This is not limited in this embodiment of this application.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In addition, according to the context, the term "when" used in the foregoing embodiments may be interpreted as a meaning of "if" or "after" or "in response to determining" or "in response to detecting". Similarly, according to the context, the phrase "when it is determined that..." or "if (a stated condition or event) is detected" may be interpreted as a meaning of "if it is determined that... ", "in response to determining... ", "when (a stated condition or event) is detected", or "in response to detecting (a stated condition or event)". In addition, in the foregoing embodiments, relationship terms such as first and second are used to distinguish one entity from another entity, but do not limit any actual relationship and sequence between these entities.

In embodiments provided in this application, the methods provided in embodiments of this application are described from the perspective in which the terminal device (for example, the mobile phone) is used as an execution body. To implement the functions in the methods provided in embodiments of this application, the terminal device may include a hardware structure and/or a software module, and implement the foregoing functions in a form of a hardware structure, a software module, or a hardware structure plus a software module. Whether a function in the foregoing functions is performed by using the hardware structure, the software module, or the combination of the hardware structure and the software module depends on particular applications and design constraints of the technical solutions.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The available medium may be a magnetic medium (for example, a floppy disk, a hard disk, or a magnetic tape), an optical medium (for example, a DVD), a semiconductor medium (for example, a Solid-State Drive (SSD)), or the like. In a case in which no conflict occurs, the solutions in the foregoing embodiments may be combined for use.

It is to be noted that a part of this patent application document includes content protected by copyright. Except for making copies of patent documents of the Patent Office or recorded content of patent documents, the copyright owner reserves the copyright.

## Claims

1. A communication method, wherein the method comprises:
sending first request information to a network device, wherein the first request information is for requesting to obtain a network selection policy for cell reselection or cell handover, the first request information comprises an identifier of a first cell, and the first cell is a cell on which a first terminal device currently camps;
receiving a first network selection policy from the network device, wherein the first network selection policy indicates a to-be-measured neighboring cell and/or a measurement manner corresponding to each of to-be-measured neighboring cells, and a quantity of to-be-measured neighboring cells is less than or equal to a quantity of neighboring cells of the first cell; and
performing cell measurement according to the first network selection policy when a first condition is satisfied, to determine a target cell.

2. The method according to claim 1, wherein the first network selection policy comprises one or more of the following:
a parameter of each neighboring cell;
an exit threshold, wherein the exit threshold indicates a threshold of stopping performing cell measurement according to the first network selection policy; or
a quantity of neighboring cells measured in one discontinuous reception DRX cycle.

3. The method according to claim 2, wherein the to-be-measured neighboring cell comprises a first neighboring cell, and a parameter of the first neighboring cell comprises an identifier of the first neighboring cell and a frequency of the first neighboring cell.

4. The method according to claim 3, wherein the parameter of the first neighboring cell further comprises one or more of the following:
a measurement start threshold of the first neighboring cell, wherein the measurement start threshold indicates a threshold of starting measuring the first neighboring cell;
a measurement stop threshold of the first neighboring cell, wherein the measurement stop threshold indicates a threshold of stopping measuring the first neighboring cell;
a priority of the first neighboring cell; or
a radio access technology RAT of the first neighboring cell.

5. The method according to claim 4, wherein the method further comprises:
if at least two neighboring cells of to-be-measured neighboring cells corresponding to the first cell have a same measurement start threshold, determining, based on priorities of the at least two neighboring cells, a sequence of measuring the at least two neighboring cells.

6. The method according to any one of claims 1 to 5, wherein the first network selection policy is determined by the network device based on auxiliary information from at least one second terminal device, and the auxiliary information comprises:
a radio resource management RRM measurement result obtained when the second terminal device camps on the first cell; and/or
an RRM measurement result obtained when the second terminal device performs cell reselection or cell handover in the first cell.

7. The method according to claim 6, wherein the RRM measurement result comprises the identifier of the first cell and at least one of the following:
a time point at which the second terminal device enters the first cell and/or a time point at which the second terminal device leaves the first cell;
a reference signal received power RSRP of the first cell that is obtained through measurement when the second terminal device camps on the first cell;
an RSRP of the first cell that is obtained through measurement when the second terminal device leaves the first cell;
an identifier of a neighboring cell selected when the second terminal device performs cell reselection or cell handover; or
an RSRP of a neighboring cell that is obtained through measurement when the second terminal device performs cell reselection or cell handover.

8. The method according to claim 6 or 7, wherein the auxiliary information further comprises one or more of the following:
device type information and/or device model information of the second terminal device;
an abnormal event triggering the second terminal device to perform cell reselection or cell handover, wherein the abnormal event comprises one or more of the following: signal strength of the first cell that is obtained through measurement by the second terminal device is less than or equal to preset signal strength, a network connection between the second terminal device and the first cell is broken, a current communication standard of the second terminal device is lower than a communication standard that is at a previous moment, or a ping-pong event, wherein the ping-pong event indicates that the second terminal device camps on at least two cells back and forth, and the at least two cells comprise the first cell;
location information of the second terminal device;
a moving direction of the second terminal device;
a moving speed of the second terminal device; or
first indication information, wherein the first indication information indicates whether the second terminal device executes the network selection policy from the network device.

9. The method according to any one of claims 6 to 8, wherein the receiving a first network selection policy from the network device comprises:
receiving a network selection policy obtained by performing M times of optimization on the first network selection policy by the network device based on a first execution result, wherein the first execution result is an execution result of performing cell reselection or cell handover by at least one third terminal device according to the first network selection policy, the first execution result indicates whether the third terminal device successfully selects a neighboring cell according to the first network selection policy, and M is a quantity of times of optimization performed before the network device receives the first request information.

10. The method according to any one of claims 6 to 9, wherein duration for which the second terminal device camps on the first cell is greater than or equal to first duration.

11. The method according to any one of claims 1 to 10, wherein the first request information further comprises one or more of the following:
device type information and/or device model information of the first terminal device;
location information of the first terminal device;
a moving direction of the first terminal device; or
a moving speed of the first terminal device.

12. The method according to claim 11, wherein the first network selection policy further comprises a measurement cycle for measuring each of to-be-measured neighboring cells, and the measurement cycle is determined based on the location information, the moving direction, and/or the moving speed of the first terminal device.

13. The method according to claim 12, wherein the measurement cycle is indicated by a parameter of the DRX cycle.

14. The method according to any one of claims 1 to 13, wherein the first network selection policy further comprises:
identifiers and frequencies of K cells, wherein the K cells comprise the first cell and K-1 cells on which the first terminal device is about to camp, the first network selection policy indicates a to-be-measured neighboring cell corresponding to each cell of the K cells and/or a measurement manner corresponding to each of to-be-measured neighboring cells corresponding to the cell, and K is an integer greater than or equal to 1.

15. The method according to any one of claims 1 to 14, wherein the method further comprises:
sending the first request information to the network device when a second condition is satisfied, wherein the second condition comprises one or more of the following:
the first cell is a cell on which the first terminal device did not camp before;
the first terminal device stores no network selection policy from the network device; or
the first terminal device stores a second network selection policy from the network device, and storage duration of the second network selection policy is greater than or equal to second duration.

16. The method according to any one of claims 1 to 15, wherein the method further comprises:
sending, to the network device, the first execution result of performing cell reselection or cell handover according to the first network selection policy, wherein the first execution result indicates whether the first terminal device successfully determines the target cell, and the first execution result is for optimizing the first network selection policy.

17. The method according to claim 16, wherein the first execution result indicates that the first terminal device successfully determines the target cell, and the first execution result further comprises an identifier of the target cell.

18. A communication method, applied to a network device, wherein the method comprises:
receiving first request information from a first terminal device, wherein the first request information is for requesting to obtain a network selection policy for cell reselection or cell handover, the first request information comprises an identifier of a first cell, and the first cell is a cell on which the first terminal device currently camps;
determining, based on the identifier of the first cell, a first network selection policy corresponding to the first cell, wherein the first network selection policy indicates a to-be-measured neighboring cell and/or a measurement manner corresponding to each of to-be-measured neighboring cells, and a quantity of to-be-measured neighboring cells is less than or equal to a quantity of neighboring cells of the first cell; and
sending the first network selection policy to the first terminal device, wherein the first network selection policy is used by the first terminal device to determine a target cell.

19. The method according to claim 18, wherein the first network selection policy comprises one or more of the following:
a parameter of each neighboring cell;
an exit threshold, wherein the exit threshold indicates a threshold of stopping performing cell measurement according to the first network selection policy; or
a quantity of neighboring cells measured in one discontinuous reception DRX cycle.

20. The method according to claim 18, wherein the to-be-measured neighboring cell comprises a first neighboring cell, and a parameter of the first neighboring cell comprises an identifier of the first neighboring cell and a frequency of the first neighboring cell.

21. The method according to claim 20, wherein the parameter of the first neighboring cell further comprises one or more of the following:
a measurement start threshold of the first neighboring cell, wherein the measurement start threshold indicates a threshold of starting measuring the first neighboring cell;
a measurement stop threshold of the first neighboring cell, wherein the measurement stop threshold indicates a threshold of stopping measuring the first neighboring cell;
a priority of the first neighboring cell; or
a radio access technology RAT of the first neighboring cell.

22. The method according to claim 21, wherein the priority is used by the first terminal device to determine, when at least two neighboring cells of to-be-measured neighboring cells corresponding to the first cell have a same measurement start threshold, a sequence of measuring the at least two neighboring cells.

23. The method according to any one of claims 18 to 22, wherein the method further comprises:
receiving auxiliary information from at least one second terminal device, and determining the first network selection policy based on the auxiliary information, wherein the auxiliary information comprises:
a radio resource management RRM measurement result obtained when the second terminal device camps on the first cell; and/or
a radio resource management RRM measurement result obtained when the second terminal device performs cell reselection or cell handover in the first cell.

24. The method according to claim 23, wherein the RRM measurement result comprises the identifier of the first cell and one or more of the following:
a time point at which the second terminal device enters the first cell and/or a time point at which the second terminal device leaves the first cell;
a reference signal received power RSRP of the first cell that is obtained through measurement when the second terminal device camps on the first cell;
an RSRP of the first cell that is obtained through measurement when the second terminal device leaves the first cell;
an identifier of a neighboring cell selected when the second terminal device performs cell reselection or cell handover; or
an RSRP of a neighboring cell that is obtained through measurement when the second terminal device performs cell reselection or cell handover.

25. The method according to claim 23 or 24, wherein the auxiliary information further comprises one or more of the following:
device type information and/or device model information of the second terminal device;
an abnormal event triggering the second terminal device to perform cell reselection or cell handover, wherein the abnormal event comprises one or more of the following: signal strength of the first cell that is obtained through measurement by the second terminal device is less than or equal to preset signal strength, a network connection between the second terminal device and the first cell is broken, a current communication standard of the second terminal device is lower than a communication standard that is at a previous moment, or a ping-pong event, wherein the ping-pong event indicates that the second terminal device camps on at least two cells back and forth, and the at least two cells comprise the first cell;
location information of the second terminal device;
a moving direction of the second terminal device;
a moving speed of the second terminal device; or
first indication information, wherein the first indication information indicates whether the second terminal device executes the network selection policy from the network device.

26. The method according to any one of claims 23 to 25, wherein the method further comprises:
optimizing the first network selection policy; and
the optimizing the first network selection policy comprises:
in an i^{th} optimization process, receiving, from a third terminal device, a first execution result of performing cell reselection or cell handover according to the first network selection policy, and optimizing the first network selection policy based on the first execution result, wherein i is an integer from 1 to M, M is a quantity of times of optimization performed before the first request information is received, and the first execution result indicates whether at least one third terminal device successfully selects a neighboring cell according to the first network selection policy.

27. The method according to claim 26, wherein the sending the first network selection policy to the first terminal device comprises:
sending, to the first terminal device, a network selection policy obtained by performing M times of optimization on the first network selection policy.

28. The method according to any one of claims 23 to 26, wherein duration for which the second terminal device camps on the first cell is greater than or equal to first duration.

29. The method according to any one of claims 18 to 27, wherein the first request information further comprises one or more of the following:
device type information and/or device model information of the first terminal device;
location information of the first terminal device;
a moving direction of the first terminal device; or
a moving speed of the first terminal device.

30. The method according to claim 29, wherein the method further comprises:
determining, based on the location information, the moving direction, and/or the moving speed of the first terminal device, a measurement cycle for measuring each of to-be-measured neighboring cells, wherein the first network selection policy further comprises the measurement cycle.

31. The method according to claim 30, wherein the measurement cycle is indicated by a parameter of the DRX cycle.

32. The method according to any one of claims 18 to 30, wherein the first network selection policy further comprises:
identifiers and frequencies of K cells, wherein the K cells comprise the first cell and K-1 cells on which the first terminal device is about to camp, the first network selection policy indicates a to-be-measured neighboring cell corresponding to each cell of the K cells and/or a measurement manner corresponding to each of to-be-measured neighboring cells corresponding to the cell, and K is an integer greater than or equal to 1.

33. The method according to any one of claims 18 to 32, wherein the method further comprises:
receiving, from the first terminal device, the first execution result of performing cell reselection or cell handover according to the first network selection policy, wherein the first execution result indicates whether the first terminal device successfully determines the target cell; and
optimizing the first network selection policy based on the first execution result.

34. The method according to claim 33, wherein the first execution result indicates that the first terminal device successfully determines the target cell, and the first execution result further comprises an identifier of the target cell.

35. A communication apparatus, comprising:
a processor, a memory, and one or more programs, wherein
the one or more programs are stored in the memory, the one or more programs comprise instructions, and when the instructions are executed by the processor, the communication apparatus is enabled to perform steps in the method according to any one of claims 1 to 34.

36. A computer-readable storage medium, wherein the computer-readable storage medium is configured to store a computer program, and when the computer program is run on a computer, the computer is enabled to perform the method according to any one of claims 1 to 34.

37. A chip system, comprising a processor and an interface, wherein the processor is configured to invoke instructions from the interface and run the instructions, to enable the chip system to implement the method according to any one of claims 1 to 34.
